(19) Europäisches Patentamt / European Patent Office / Office européen des brevets

(11) **EP 2 592 170 B1**

(12) **EUROPEAN PATENT SPECIFICATION**

(45) Date of publication and mention
of the grant of the patent:
**02.01.2019 Bulletin 2019/01**

(21) Application number: **11792566.9**

(22) Date of filing: **10.06.2011**

(51) Int Cl.:
*C22F 1/053* (2006.01)          *B21J 5/00* (2006.01)
*B22D 11/20* (2006.01)          *C22C 21/10* (2006.01)
*B32B 15/01* (2006.01)          *B22D 11/00* (2006.01)
*A63B 53/04* (2015.01)          *B22D 11/12* (2006.01)
*B21J 1/00* (2006.01)

(86) International application number:
**PCT/JP2011/063406**

(87) International publication number:
**WO 2011/155609 (15.12.2011 Gazette 2011/50)**

(54) **METHOD FOR PRODUCING AL ALLOY JOINED BODY**

HERSTELLUNGSVERFAHREN FÜR EINEN MIT EINER AL-LEGIERUNG VERBUNDENEN KÖRPER

PROCÉDÉ DE FABRICATION D'UN CORPS CONSTITUÉ D'UN ALLIAGE D'ALUMINIUM (AL)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.06.2010 JP 2010134024**

(43) Date of publication of application:
**15.05.2013 Bulletin 2013/20**

(73) Proprietor: **Showa Denko K.K.
Tokyo 105-8518 (JP)**

(72) Inventors:
• **TAKEMURA Hideki
Kitakata-shi
Fukushima 966-0845 (JP)**

• **FUJITA Takahiro
Kitakata-shi
Fukushima 966-0845 (JP)**

(74) Representative: **Viering, Jentschura & Partner
mbB
Patent- und Rechtsanwälte
Am Brauhaus 8
01099 Dresden (DE)**

(56) References cited:
JP-A- 3 122 243          JP-A- 7 003 353
JP-A- 2001 115 227      JP-A- 2002 294 383
JP-A- 2002 348 631      JP-A- 2006 505 695
JP-A- 2006 505 695      JP-A- 2008 150 653
JP-A- 2010 261 061      JP-A- 2010 261 061
US-A1- 2006 016 523

**Description**

**TECHNICAL FIELD**

The present invention relates to a method for producing an Al alloy joined body by welding Al (aluminum) alloys and also relates to its related technologies.

**BACKGROUND TECHNIQUE**

An Al-Zn-Mg series Al alloy has been widely used as a structural material due to its excellent strength and workability.

It is known that when such Al-Zn-Mg series Al alloy members are welded together, the welded portion will re-solution treated due to the welding heat to be softened once, but the subsequent natural aging causes resumption of the strength. Therefore, an Al-Zn-Mg series alloy has been commonly used as a material required to be welded and to have a high-strength among structural materials.

Also, in a commonly-used Al-Zn-Mg series alloy, as shown in, e.g., the following Patent Documents 1 to 3, it is known that the tensile strength and hardness can be increased and the stress corrosion cracking property can be improved by performing artificial aging after leaving a quenched alloy at room temperature for 24 hours or more after the quenching treatment, rather than performing artificial aging immediately after the quenching treatment. As to the artificial aging conditions, for the purpose of improving the tensile strength and the hardness, a so-called two-step aging treatment is conducted, wherein a first aging treatment is performed at 80 to 130 °C for 1 to 16 hours and thereafter a second aging treatment is performed at 140 to 190 °C for 2 to 24 hours.

**PRIOR ART**

**PATENT DOCUMENT**

Patent Document 1: Unexamined Laid-open Japanese Patent Application Publication No. H02-70044
Patent Document 2: Unexamined Laid-open Japanese Patent Application Publication No. S57-158360
Patent Document 3: Unexamined Laid-open Japanese Patent Application Publication No. S51-10113

JP 2002 294383 A discloses that an aluminum alloy ingot for plastic working has a composition containing, by weight, 0.8 to 1.2% Mg, 0.7 to 1.0% Si, 0.3 to 0.65% Cu, 0.14 to 0.3% Mn, 0.14 to 0.3% Cr, $\leq$0.5% Fe, 0.01 to 0.15% Ti and 0.0001 to 0.03% B, and has a structure in which the average grain size of crystallized products is $\leq$8 $\mu$m, spacing between dendrite secondary arms is $\leq$40 $\mu$m, and also, the crystal grain size is $\leq$ 300 $\mu$m (cf. abstract) .

**SUMMARY OF THE INVENTION**

**PROBLEMS TO BE SOLVED BY THE INVENTION**

In recent years, in a vehicle in which Al-Zn-Mg series alloys are used a lot, reduction in weight is desired to improve maneuverability and environmental performance of the vehicle. Furthermore, in such alloy, it is also desired to secure the high strength without losing the hardness recovery performance after welding.

On the other hand, in the technical field of Al alloys, similar to other metalworking technical fields, although improvement in productivity is always desired, in an Al-Zn-Mg series alloy, there is a problem that it is very difficult to improve productivity while attaining high strength and weight saving.

In other words, as shown in Patent Documents 1 to 3, in the conventional Al-Zn-Mg series alloys, there existed such problem that it was difficult to improve productivity because long and complex heat treatments were required for the aging treatment to secure sufficient strength. Also, if it is attempted to simplify the heat treatment, a problem occurs that sufficient strength cannot be obtained, requiring reinforcement by thickening, which in turn makes it difficult to attain weight saving.

The preferred embodiments of the present invention have been developed in view of the above-mentioned and/or other problems in the related art. The preferred embodiments of the present invention can significantly improve upon existing methods and/or apparatuses.

The present invention was made in view of the aforementioned problems, and aims to provide a method for producing an Al alloy joined body, which can efficiently produce a high-strength and lightweight Al alloy joined body and to provide its related technologies.

Other objects and advantages of the present invention will be apparent from the following preferred embodiments.

## MEANS FOR SOLVING THE PROBLEMS

To achieve the aforementioned purposes, the present invention provides a method for producing a welding Al alloy forged member according to claim 1, and a method for producing an Al alloy joined body according to claim 4.

In the present invention, the "casting rate" denotes a rate of pulling out an ingot from a mold, which can be obtained by measuring the moving rate of the ingot per unit time. During the casting, the rate is gradually increased from the stopped state and reaches a maximum speed in which the casting is in a stable condition. In the present invention, this maximum speed is referred to as a maximum casting rate.

Furthermore, in the present invention, the "single-step aging treatment" denotes one time (single) aging treatment performed in a relatively short time. In the present invention, there is no need to perform two or more aging treatments, and after the single-step aging treatment, there is no need to perform any additional aging treatment. In other words, in the present invention, after performing a single-step aging treatment of a forged member, it is possible to omit a second and subsequent aging treatments and perform a subsequent treatment, such as, e.g., a cutting treatment, other than an aging treatment.

The single-step aging treatment of the present invention is one time aging treatment and differs from a two-step aging treatment which performs aging treatments twice including a first aging treatment and a second aging treatment.

Furthermore, the single-step aging treatment of the present invention is a relatively short time treatment, and differs from a single-step aging treatment which performs a long and complex single-step aging treatment, such as, e.g., a single-step aging treatment conducting a complex temperature control and taking a long time over 24 hours.

Also, in the present invention, after the solution heat treatment but before the single-step aging treatment, a room temperature leaving treatment (a treatment of leaving the Al alloy forged member at room temperature), etc. , can be performed. Alternatively, the single-step aging treatment can be performed immediately after the solution heat treatment without performing a room temperature leaving treatment, etc.

## EFFECTS OF THE INVENTION

According to the method for producing an Al alloy joined body, an Al alloy forged product having high strength and desired mechanical characteristics and corrosion resistance can be obtained without losing the hardness recovery performance after welding. Furthermore, the single-step aging treatment is short and can be simplified, and therefore an Al alloy joined body having the aforementioned desired characteristics can be efficiently produced.

Also, since the decrease in hardness of the welded portion is small, the load capable of bearing at the whole area of the Al alloy joined body becomes larger, which enables reduction of the weight of the Al alloy joined body, resulting in a light weighted product.

Here, in the present invention, "the hardness recovery performance after welding" denotes a rate of decrease in Vickers hardness of the heat affected portion caused by welding to the Vickers hardness of the T6 treated base material. Specifically, when the rate of decrease is 20% or less, it is judged that the hardness recovery performance after welding is excellent.

In the present invention, the "hardness recovery performance after welding" can be defined by the following relationship.

"Hardness recovery performance after welding" = ("Vickers hardness of base material" - "Vickers hardness of the heat affected portion")/"Vickers hardness of base material"

Furthermore, in the present invention, it is judged that tensile strength of 450 MPa or greater is "high strength."

In addition, in the present invention, the Vickers hardness is based on JIS Z 2244. Furthermore, the tensile strength is based on JIS Z 2201 and JIS Z 2241.

According to the method for producing an Al alloy joined body, an aging treatment can be assuredly performed and productivity can be assuredly improved.

According to the method for producing an Al alloy joined body, forging processing can be accurately performed.

According to the method for producing an Al alloy joined body, an Al alloy joined body more excellent in mechanical strength can be obtained.

According to the method for producing an Al alloy forged member for welding, an Al alloy forged member most suited as an Al alloy joined member for welding can be produced.

According to the method for producing an Al alloy forged member for welding, desired Al alloy melt can be prepared, and a high quality Al alloy forged member can be obtained. solution heat treatment heat processing zone and the single-step aging treatment heat processing zone with the carrying device.

[8] The device for producing an Al alloy joined body as recited in Item 7, further comprising a water tank zone having a quenching water tank filled with water and arranged between the solution heat treatment heat processing zone and the single-step aging treatment heat processing zone,
wherein the member to be processed is subjected to a quenching treatment by passing the member to be processed through an inside of the water tank of the water tank zone after performing the solution heat treatment but before performing the single-step aging treatment.
[9] The device for producing an Al alloy joined boy as recited in Item 8, wherein
the solution heat treatment heat processing zone and the single-step aging treatment heat processing zone are arranged in parallel such that the member to be processed is carried in opposite directions;
a carry-out side end portion of the solution heat treatment heat processing zone and a carry-in side end portion of the single-step aging treatment heat processing zone are arranged correspondingly; and
the material to be processed passing through the solution heat treatment heat processing zone, the water tank zone and the single-step aging treatment heat processing zone is carried by turning at a vicinity of the water tank zone.
[10] A method for producing a welding Al alloy cast member, comprising:

a step of obtaining an Al alloy melt having an alloy composition consisting of Fe: 0.2 to 0.35 mass%, Cu: 0.1 to 0.4 mass%, Mn: 0.3 to 0.6 mass%, Mg: 2.0 to 2.5 mass%, Zn: 5.0 to 5.5 mass%, Zr: 0.1 to 0.2 mass%, Ti: 0.2 mass% or less, and the balance being Al and inevitable impurities;
a step of obtaining an Al alloy ingot having a structure in which a dendrite arm spacing (DAS) is 40 $\mu$m or less and an average particle diameter is 8 $\mu$m or less by continuously casting the Al alloy melt at a casting rate meeting a condition of [maximum casting rate (mm/min) $\leqq$ -1.43 x casting diameter (mm) +500]; and
a step of obtaining an Al alloy cast member by subjecting the Al alloy ingot to a homogenization treatment of holding the Al alloy ingot for one hour or more at a temperature of 400 to 600 °C.

[11] The method for producing an Al alloy cast member as recited in Item 10, comprising:

a first preparation step of setting each content of Fe, Cu, Mn, Mg, Zn, Zr, and Ti of the Al alloy melt to each temporary value prior to a preparation of the Al alloy melt;
a second preparation step of setting a target characteristic of the Al alloy forged member to be obtained by forging the Al alloy cast member;
a third preparation step of obtaining a pre-production Al alloy cast member by sequentially subjecting the pre-production Al alloy melt obtained based on the temporary value to a step compliant with the step of obtaining the Al alloy ingot and a step compliant with the step of obtaining the Al alloy cast member and obtaining a pre-production Al alloy forged member by subjecting the pre-production Al alloy cast member to hot forging; and
a forth preparation step of comparing an actual characteristic obtained from the pre-production Al alloy forged member with the target characteristic and changing the temporary value based on a comparison result,
wherein an Al alloy melt for actual use is prepared by repeatedly performing the third and fourth preparation steps.

[12] A method for producing a welding Al alloy forged member, comprising:

a step of obtaining an Al alloy melt having an alloy composition consisting of Fe: 0.2 to 0.35 mass%, Cu: 0.1 to 0.4 mass%, Mn: 0.3 to 0.6 mass%, Mg: 2.0 to 2.5 mass%, Zn: 5.0 to 5.5 mass%, Zr: 0.1 to 0.2 mass%, Ti: 0.2 mass% or less, and the balance being Al and inevitable impurities;
a step of obtaining an Al alloy ingot having a structure in which a dendrite arm spacing (DAS) is 40 $\mu$m or less and an average particle diameter of crystallized substances is 8 $\mu$m or less by continuously casting the Al alloy melt at a casting rate meeting a condition of [maximum casting rate (mm/min) $\leqq$ -1.43x casting diameter+500];
a step of obtaining an Al alloy cast member by subjecting the Al alloy ingot to a homogenization treatment of holding the Al alloy ingot for one hour or more at a temperature of 400 to 600 °C;
a step of obtaining an Al alloy forged member by subjecting the Al alloy cast member to hot forging; and
a step of subjecting the Al alloy forged member to a solution heat treatment; and
a step of subjecting the Al alloy forged member after the solution heat treatment to a single-step aging treatment.

[13] The method for producing an Al alloy forged member as recited in Item 12, comprising:

a first preparation step of setting each content of Fe, Cu, Mn, Mg, Zn, Zr, and Ti of the Al alloy melt to each temporary value prior to a preparation of the Al alloy melt;

a second preparation step of setting a target characteristic of the Al alloy forged member to be produced;

a third preparation step of obtaining a pre-production Al alloy forged member by sequentially subjecting the pre-production Al alloy melt obtained based on the temporary value to a step compliant with the step of obtaining the Al alloy ingot, a step compliant with the step of obtaining the Al alloy cast member, a step compliant with the step of the solution heat treatment, and a step compliant with the step of the single-step aging treatment; and

a forth preparation step of comparing an actual characteristic obtained from the pre-production Al alloy forged member with the target characteristic and changing the temporary value based on a comparison result,

wherein an Al alloy melt for actual use is prepared by repeatedly performing the third and fourth preparation steps.

[14] The method for producing a welding Al alloy forged member as recited in Item 13, wherein

at the second preparation step, a target aging time of the single-step aging treatment is previously set;

at the third preparation step, an actual aging time is measured;

at the fourth preparation step, the actual aging time is compared with the target aging time and the temporary value is changed based on a comparison result.

[15] An Al alloy joined body in which a plurality of Al alloy members to be joined are joined such that a build-up portion caused by welding is formed at a welded portion between the members and a heat-affected portion affected by heat of the welding is formed at a vicinity of the build-up portion; wherein

at least one or more members to be joined among the plurality of members to be joined has an alloy composition consisting of Fe: 0.2 to 0.35 mass%, Cu: 0.1 to 0.4 mass%, Mn: 0.3 to 0.6 mass%, Mg: 2.0 to 2.5 mass%, Zn: 5.0 to 5.5 mass%, Zr: 0.1 to 0.2 mass%, Ti: 0.2 mass% or less, and the balance being Al and inevitable impurities; and it is constituted that a relation of $[V_1/V_2 \geqq 0.8]$ is satisfied, where $V_1$ is a hardness of the heat-affected portion, and $V_2$ is an average hardness of a portion not affected by the heat of the welding.

## EFFECTS OF THE INVENTION

According to the method for producing an Al alloy joined body, an Al alloy forged product having high strength and desired mechanical characteristics and corrosion resistance can be obtained without losing the hardness recovery performance after welding. Furthermore, the single-step aging treatment is short and can be simplified, and therefore an Al alloy joined body having the aforementioned desired characteristics can be efficiently produced.

Also, since the decrease in hardness of the welded portion is small, the load capable of bearing at the whole area of the Al alloy joined body becomes larger, which enables reduction of the weight of the Al alloy joined body, resulting in a light weighted product.

Here, in the present invention, "the hardness recovery performance after welding" denotes a rate of decrease in Vickers hardness of the heat affected portion caused by welding to the Vickers hardness of the T6 treated base material. Specifically, when the rate of decrease is 20% or less, it is judged that the hardness recovery performance after welding is excellent.

In the present invention, the "hardness recovery performance after welding" can be defined by the following relationship.

"Hardness recovery performance after welding" = ("Vickers hardness of base material" - "Vickers hardness of the heat affected portion")/"Vickers hardness of base material"

Furthermore, in the present invention, it is judged that tensile strength of 450 MPa or greater is "high strength."

In addition, in the present invention, the Vickers hardness is based on JIS Z 2244. Furthermore, the tensile strength is based on JIS Z 2201 and JIS Z 2241.

According to the method for producing an Al alloy joined body as recited in Item [2], an aging treatment can be assuredly performed and productivity can be assuredly improved.

According to the method for producing an Al alloy joined body as recited in Item [3], forging processing can be accurately performed.

According to the method for producing an Al alloy joined body of Invention [4] to [6], an Al alloy joined body more excellent in mechanical strength can be obtained.

According to the device for producing an Al alloy joined body of Invention [7] to [9], an Al alloy joined body having the desired characteristics can be produced with better efficiency.

According to the method for producing an Welding Al alloy cast member of Invention [10], an Al alloy cast member most suited for an Al alloy joined member for welding can be produced.

According to the method for producing an Al alloy cast member of Invention [11], a desired Al alloy melt can be prepared, and a high quality Al alloy cast member can be obtained.

According to the method for producing an Al alloy forged member for welding of Invention [12], an Al alloy forged member most suited as an Al alloy joined member for welding can be produced.

According to the method for producing an Al alloy forged member for welding of Invention [13] and [14], desired Al alloy melt can be prepared, and a high quality Al alloy forged member can be obtained.

According to the Al alloy joined body of Invention [15], since there is little decrease in hardness of the welded portion, the weight of the entire body can be reduced while securing the desired mechanical characteristic and corrosion resistance.

## BRIEF DESCRIPTION OF THE DRAWINGS

Fig. 1 is a flow chart for explaining a method for producing an Al alloy joined body according to an embodiment of the present invention.

Fig. 2 is a graph showing a relationship between a maximum casting rate and DSA of an Al alloy.

Fig. 3 is a perspective view showing a disc sample for use in an alloy composition analysis.

Fig. 4A is a cross-sectional view showing a condition immediately before welding Al alloy members to be joined.

Fig. 4B is a cross-sectional view showing a condition immediately after welding Al alloy members to be joined.

Fig. 5 is a graph showing a relationship between the DAS and the aging time.

Fig. 6 is a graph showing a relationship between an average particle diameter and an extension of a crystallized portion.

Fig. 7 is a block diagram showing an example of a device for producing an Al alloy joined body.

Fig. 8 is a block diagram showing another example of a device for producing an Al alloy joined body.

## EMBODIMENTS FOR CARRYING OUT THE INVENTION

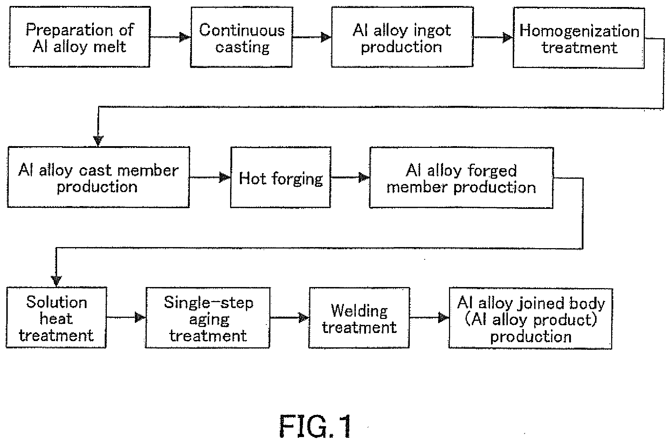

Fig. 1 is a flow chart for explaining an example of a method for producing an Al alloy joined body according to an embodiment of the present invention.

As shown in Fig. 1, preparing Al alloy melt having a predetermined alloy composition, an Al alloy ingot is obtained by continuously casting the Al alloy melt under predetermined conditions. Next, an Al alloy cast member is obtained by subjecting the Al alloy ingot to a homogenization treatment. Thereafter, an Al alloy forged member is obtained by subjecting the Al alloy cast member to hot forging. Furthermore, the Al alloy forged member is subjected to a solution heat treatment and then a single-step aging treatment. After that, without performing an aging treatment (second and subsequent aging treatments), the Al alloy forged members after the single-step aging treatment are integrally joined by welding to thereby obtain an Al alloy joined body which is an Al alloy product of this embodiment.

Hereinafter, a method for producing an Al alloy joined body of this embodiment will be explained in detail according to the production steps.

Al alloy melt as an Al casting material used in the present invention has an alloy composition consisting of Fe: 0.2 to 0.35 mass%, Cu: 0.1 to 0.4 mass%, Mn: 0.3 to 0.6 mass%, Mg: 2.0 to 2.5 mass%, Zn: 5.0 to 5.5 mass%, Zr: 0.1 to 0.2 mass%, Ti: 0.2 mass% or less, and the balance being Al and inevitable impurities.

Among the alloy compositions of the present invention, Fe is an element that controls possible ingot cracking during the casting procedure and possible weld cracking during the welding procedure and also controls possible rough recrystallization. The content (concentration) of Fe in the present invention needs to be adjusted to 0.2 to 0.35 mass%. Preferably, the content of Fe is adjusted to 0.30 to 0.35 mass%.

When the content of Fe is less than 0.2 mass%, the aforementioned effects cannot be sufficiently obtained. On the other hand, when the content exceeds 0.35 mass%, it is not desirable because of the following reasons. Al-Fe-Mn series rough crystallized substances increase, causing deterioration of the plastic workability during the forging process. Furthermore, when Al alloy products constituted by the forged members after forging process are finally assembled to a vehicle body, etc., there is a possibility that the extension (elongation), the toughness, the fatigue strength, and the impact property of the Al alloy product (assembled member) are reduced.

Cu is an element that not only increases the degree of supersaturation of the solute in the solid solution but also provides strength by depositing Al-Cu-Mg intermetallic compounds by coexisting with Mg.

In the present invention, Cu can appropriately change the behavior of deposition of Al-Cu-Mg series intermetallic compounds so that the deposition state of the Al-Cu-Mg series intermetallic compound by the aging treatment of the Al alloy becomes fine and precise, by making Cu coexist with Mg and controlling the coexisting state with Mg. In other words, Cu is an essential element which enables obtaining the same performance as the mechanical characteristics and corrosion resistance obtained by a conventional two-step aging treatment in which a second aging treatment of 2 to 24 hours at 40-190 ºC is performed after a first aging treatment of 1 to 16 hours at 80 to 130 ºC, with only one aging treatment (single-step aging treatment) performed at 130 to 170 ºC in a relatively short time. The relatively short time denotes, for example, 8 to 12 hours, preferably around 8 hours.

The mechanism is presumed to be as follows.

In a conventional and normal Al-Zn-Mg series alloy, when the aging treatment temperature is set to be high, the deposition density becomes rough because Mg-Zn series intermetallic compounds are roughly deposited in the Al matrix in the early stage of the aging treatment, and the deposition density stays rough even if the aging treatment is continued. Therefore, the aging effects could not be sufficiently obtained, resulting in a lower maximum value of hardness. For this reason, conventionally, the initial temperature for the aging treatment was set to be low to cause fine deposits of Mg-Zn series intermetallic compounds in the Al matrix. Thereafter, a high-temperature aging treatment or a long-hour low-temperature aging treatment was performed to make deposits grow into a size which contributes to the hardness increase to thereby increase the maximum value of the hardness. Therefore, as the aging treatment, there was no choice to employ either two steps of aging treatments, i.e., a low-temperature short-time aging treatment and a high-temperature short-time aging treatment, or a single-step of an aging treatment, i.e., a low-temperature long-time aging treatment. Therefore, conventionally, a prolonged time period and complex temperature controls were needed for such aging treatment, resulting in deterioration of productivity.

On the other hand, in the present invention, Cu is added within a certain range. With this, even if the aging treatment is performed at a high temperature, Al-Cu-Mg series intermetallic compounds can be deposited in the Al matrix finely at a high density in the early stage of the aging treatment, and thereafter Zn-Mg series intermetallic compounds can be deposited onto the finely deposited Al-Cu-Mg series intermetallic compounds. As a result, Zn-Mg series intermetallic compounds grown into a size which contributes to the strength exist in the Al matrix finely and precisely, which enables sufficient increase in the maximum value of hardness.

In the present invention, the content (concentration) of Cu needs to be adjusted to 0.1 to 0.4 mass%, preferably 0.30 to 0.40 mass%. If the content of Cu is less than 0.1 mass%, the aforementioned effects cannot be sufficiently obtained. Further, since the amount of the Al-Cu-Mg series intermetallic compounds produced in the early stage of the aging treatment is too small, the strength improvement effects cannot be assuredly obtained with a single-step aging treatment, which requires a two-step aging treatment. Therefore, it is not preferable. On the other hand, if the content of Cu exceeds 0.4 mass%, although the strength can be improved, anti-stress corrosion cracking performance significantly deteriorates, which may cause occurrence of welding cracking. Therefore, it is not preferable.

In the present invention, Mn is an element that inhibits rough recrystallization. In this embodiment, the content (concentration) of Mn needs to be adjusted to 0.3 to 0.6 mass%, preferably adjusted to 0.5 to 0.6 mass%.

If the content of Mn is less than 0.3 mass%, the effect of inhibiting rough recrystallization decreases. On the other hand, if the content of Mn exceeds 0.6 mass%, Al-Fe-Mn series rough crystallized substances increase, which deteriorates plastic workability during the forging process. Further, when a forged Al alloy product is finally assembled to a vehicle, there is a risk that the elongation, toughness and fatigue strength of the Al alloy product (assembled member) may decrease.

Mg is an element that improves mechanical strength by depositing $MgZn_2$ intermetallic compound ($\eta$ phase) when coexisted with Zn. As explained before, when coexisted with Cu, Mg can appropriately change the behavior of deposition of Al-Cu-Mg series intermetallic compound in the early stage of the aging treatment. Therefore, Mg is an essential element that is needed to enable obtaining the same functions as the mechanical characteristics and corrosion resistance obtained by a conventional two-step aging treatment in which a second step aging treatment of 2 to 24 hours at 140-190 $\underline{o}$C is performed after a first step aging treatment of 1 to 16 hours at 80 to 130 $\underline{o}$C, with a single aging treatment (single-step aging treatment) performed at 130 to 170 $\underline{o}$C in a relatively short time. The relatively short time denotes, for example, 8 to 12 hours, preferably around 8 hours.

In the present invention, the content (concentration) of Mg needs to be adjusted to 2.0 to 2.5 mass%, more preferably adjusted to 2.2 to 2.5 mass%. If the content of Mg is too small, it is difficult to sufficiently obtain the aforementioned effects, and therefore it is not preferable. To the contrary, if the content is too large, stress corrosion cracking performance and quenching sensitivity decrease, and therefore it is not preferable.

As explained above, Zn is an element that improves mechanical strength by depositing $MgZn_2$ intermetallic compound ($\eta$ phase) when coexisted with Mg.

If the content of Zn is less than 5.0 mass%, sufficient strength cannot be obtained and therefore it is not preferable. If the content exceeds 5.5 mass%, the stress corrosion cracking performance deteriorates and therefore it is not preferable.

Therefore, in the present invention, the content (concentration) of Zn needs to be adjusted to 5.0 to 5.5 mass%, more preferably 5.2 to 5.5 mass%.

In the present invention, since Cu, Mg, and Zn are in the aforementioned relationship, the contents are preferred to be in the predetermined relationship that exerts the aforementioned functions.

Next, the conditions for satisfying the predetermined relationship will be specifically explained.

(a) As will be explained below, conventionally, in an Al alloy joined body, it was difficult to improve the hardness while improving the productivity.

(a-1) First, to perform an aging treatment, it is necessary to give more than a certain amount of energy to a subject. The energy amount is proportionate to "Temperature x Time".

(a-2) To improve the hardness as an effect of the aging treatment, the deposition of Al-Zn-Mg series intermetallic compounds needs to be fine and precise. Also the deposition amount must be over a certain amount.

(a-3) On the other hand, it is desired to improve the productivity by decreasing the time for the aging treatment. To cope with this demand, it is required to set the treatment temperature to high. However, with the conventional technologies, if the treatment temperature is set to high, the deposition of Al-Zn-Mg series intermetallic compounds becomes rough, resulting in a failure of improvement of hardness.

(b) under the circumstances, as will be explained below, the present invention has improved the hardness while improving the productivity.

(b-1) Al-Cu-Mg series intermetallic compounds which will be deposited finely even at a high treatment temperature are deposited and made as the core that the Al-Zn-Mg series intermetallic compound is deposited onto. As a result, even if the treatment temperature is high, Al-Zn-Mg series intermetallic compound can be finely deposited.

(b-2) "The deposition condition of Al-Cu-Mg series intermetallic compound with fine deposition in progress" denotes a condition in which Al-Cu-Mg series intermetallic compound is formed into a rod-shape in the <100> direction in a state matching the parent phase. In addition, the state in which Al-Cu-Mg series intermetallic compound is matching the parent phase denotes a state in which an atom forming the parent phase and an atom of Al-Cu-Mg series intermetallic compound forming the deposition are formed with one-to-one grid-point.

(b-3) Further, "the condition in which Zn-Mg series intermetallic compound is deposited onto the finely deposited Al-Cu-Mg series intermetallic compound as a core" denotes a state in which Zn-Mg series intermetallic compound is deposited on the surface of the Al-Cu-Mg series intermetallic compound deposited as explained above in (b-2), and it is a state in which the crystallized substances grow to a size in which the crystallized substances do not shear by the movement within the crystallized substance due to plastic working, etc., and form particles in non-matching with the parent phase. In addition, non-matching denotes a state in which an atom forming the parent phase and an atom of Zn-Mg series intermetallic compound forming deposition do not correspond to the one-to-one grid point.

(b-4) Therefore, in the present invention, as explained above, "time" in "temperature x time" can be shortened because an aging treatment at a high temperature can be performed.

(c) In the present invention, to realize the state in the aforementioned (b-1) to (b-3), the contents of Cu, Mg, and Zn must satisfy the relationship of "Zn amount/(Mg amount - $\alpha$ Cu amount)=3," where Cu amount=0.1 to 0.4 mass%, and $\alpha$=1 to 20, preferably 1.3 to 6.

(d) The relationship shown in (c) can be explained as follows.

(d-1) The amount of Cu needed for fine deposition of Al-Cu-Mg series intermetallic compound is 0.1 to 0.4 mass% in the present invention. On the other hand, from the view point of depositing Al-Zn-Mg series intermetallic compound without excess or deficiency, reducing unneeded crystallized substances, and restraining the decrease in elongation, which is one of mechanic characteristics of an alloy, the preferred ratio of Zn:Mg is 3:1.

(d-2) However, as explained above, because Mg and Cu form Al-Cu-Mg series intermetallic compound, the actual Mg amount and Cu amount added to an alloy must be corrected. As mentioned above, a correction of Mg amount - $\alpha$Cu amount is needed. In the alloy of the present invention, $\alpha$=1 to 20 is preferred. In addition, it is apparent from the following Examples that it is preferable that $\alpha$ falls within the range of 1 to 20.

In the present invention, Ti is an element that advances refinement of crystallized substances during casting, and refinement is especially advanced when Ti is added together with B to form $TiB_2$. In the Al alloy of the present invention, it is preferable to add Ti at a ratio of Ti:B=5:1. $TiB_2$ is a very hard particle and advances abrasion of the tool during machine processing. In the present invention, the Ti amount needs to be adjusted to 0.2 mass% or less.

Zr is an element that controls rough recrystallization and facilitates refinement of crystal particles at the welded portion. In the present invention, the content (concentration) of Zr needs to be adjusted to 0.1 to 0.2 mass%.

When the concentration of Zr is less than 0.1 mass%, it becomes difficult to sufficiently obtain the aforementioned effects. Also, when the concentration of Zr exceeds 0.2 mass%, Zr reacts to B of $TiB_2$ added for the refinement of crystal particles during casting, and forms $ZrB_2$, and interferes with the refinement of crystal particles. Therefore, a large amount of $TiB_2$ needs to be added. However, because $TiB_2$ and $ZrB_2$ are hard particles, when cutting a forged member after forging, the tool-life during cutting will be shortened, so a large addition is not desirable. Therefore, the additive amount (concentration) of Zr, as explained above, needs to be adjusted to 0.1 to 0.2 mass%.

In the present invention, more preferably, the additive amount of Ti is set to 0.03 to 0.05 mass% and the additive amount of Zr is set to 0.10 to 0.15 mass%.

In the present invention, the Al alloy melt having the aforementioned alloy composition is continuously cast to obtain an Al alloy ingot.

For example, in the present invention, the desired composition (appropriate value of the composition) of the Al alloy melt having the aforementioned composition can be obtained by the following design procedures (Steps S1 to S9).

(1) Step S1 (first preparation process: initial value setting)

The initial value (temporary value) for the production condition of Al alloy melt planned for use in the production method of the present invention is arbitrarily set within a range meeting the conditions of the present invention. For example, Fe=0.28 mass%, Cu=0.25 mass%, Mn=0.45 mass%, Mg=2.25 mass%, Zn= 5.25 mass%, Zr=0.15 mass%, Ti=0.03 mass%, and $\alpha$=3.5. Similarly, the initial value (temporary value) for the casting diameter and that of the casting rate are set to, for example, 50 mm and 380 mm/min, respectively. In the present invention, this Step S1 constitutes the first preparation process.

(2) Step S2 (second preparation process: target value setting)

For an Al alloy forged member after aging treatment to be produced, target characteristics and a target aging time are set. Characteristics are, for example, hardness, tensile strength, 0.2% proof strength, elongation, stress corrosion cracking properties, hardness recovery performance after welding, and corrosion resistance, and for example, are set according to the specifications given by customers. The details of each characteristic are described in the following Examples. The aging time is an aging treatment time needed for the hardness after aging to become the maximum value, and, for example, is set to 6 hours.

In this specification, a target value refers to the target characteristics and the target aging time. In the present invention, this Step S2 constitutes the second preparation process.

(3) Step S3 (third preparation process: sample production)

A sample Al alloy forged member (sample) according to the present invention is produced using a sample Al alloy melt obtained based on the initial value (sample production process).

The sample Al alloy melt is sequentially subjected to a process in conformity to the process of obtaining an Al alloy ingot of the present invention, a process in conformity to the process of obtaining an Al alloy cast member, a process in conformity to the process of obtaining an Al alloy forged member of the present invention, a process in conformity to the process of performing the solution heat treatment of the present invention, and a process in conformity to the process of performing a single-step aging treatment of the present invention, to produce a sample Al alloy forged member (sample). The actual characteristics and the actual aging time of the sample are measured. The characteristics and the aging time are as described above.

In this specification, the actual characteristics and the actual aging time are referred to as an actual value. Also, this Step S3 constitutes the third preparation process in the present invention.

(4) Step S4 (Zn amount adjustment)

Comparing the actual value of the sample obtained in Step S3 with the target value, if it is required to improve hardness, tensile strength, and 0.2% proof strength, Zn is increased within a range meeting the conditions of the present invention; if it is required to improve elongation and stress corrosion cracking performance, Zn is decreased, to thereby change (reset) the temporary value (initial value) of Zn. The increase and decrease ranges are, for example, 0.1 mass%. In the present invention, the process of changing the temporary value of Zn constitutes the fourth preparation process.

Step S4 and Step S3 are repeated until the difference between the actual value and the target value become, for example, 5% or less. In this way, the content of Zn is adjusted to the appropriate amount.

(5) Step S5 (Mg amount adjustment)

Comparing the actual value of the sample obtained in Step S3 or Step S4 with the target value, if it is required to improve hardness, tensile strength, and 0.2% proof strength, Mg is increased within a range meeting the conditions of the present invention; if it is required to improve elongation and stress corrosion cracking performance, Mg is decreased, to thereby change (reset) the temporary value (initial value) of Mg. The increase and decrease ranges are, for example, 0.1 mass%. In the present invention, the process of changing the temporary value of Mg constitutes the fourth preparation process.

Step S5 and Step S3 are repeated until the difference between the actual value and the target value become, for example, 5% or less. In this way, the content of Mg is adjusted to the appropriate amount.

(6) Step S6 (Cu amount adjustment)

Comparing the actual value of the sample obtained in any one of Step S3 to Step S5 with the target value, if it is required to improve hardness, tensile strength, and 0.2% proof strength, Cu is increased within a range meeting the conditions of the present invention; if it is required to improve elongation, stress corrosion cracking performance, and hardness recovery performance after welding, Cu is decreased, to thereby change the temporary value of Cu. The increase and decrease ranges are, for example, 0.1 mass%. In the present invention, the process of changing the temporary value of Cu constitutes the fourth preparation process .

Step S6 and Step S3 are repeated until the difference between the actual value and the target value becomes, for example, 5% or less. In this way, the content of Cu is adjusted to the appropriate amount.

(7) Step S7 (adjustment of corrected value $\alpha$)

Comparing the actual value of the sample obtained in any one of Steps S3 to S6 with the target value, if it is required to improve the hardness recovery performance after welding, $\alpha$ is increased within a range meeting the conditions of the present invention; if it is required to shorten the aging time, $\alpha$ is decreased, to thereby change the temporary value of $\alpha$. The increase and decrease ranges are, for example, $\alpha \times 0.1$.

Step S4 and Step S3 are repeated until the difference between the actual value and the target value becomes, for example, 5% or less. In this way, $\alpha$ is adjusted to the appropriate amount.

(8) Step S8 (Mn and Zr amount adjustment)

For the sample obtained in any one of Steps S3 to S7, if it is required to improve tensile strength, 0.2% proof strength, and elongation by controlling rough recrystallization, Mn is increased within a range meeting the conditions of the present invention; if it is required to improve plastic workability during forging and measurement accuracy of the formed article having a complex shape, Mn is decreased, to thereby change the temporary value of Mn. The increase and decrease ranges are, for example, 0.1 mass%. In the present invention, the process of changing the temporary value of Mn constitutes the fourth preparation process.

Step S8 and Step S3 are repeated until the desired characteristics are obtained. In this way, the content of Mn is adjusted to the appropriate amount.

Furthermore, if it is required to improve tensile strength, 0.2% proof strength and elongation by controlling rough recrystallization, Zr is increased within a range meeting the conditions of the present invention, and if it is required to improve plastic workability during forging and measurement accuracy of the formed article having a complex shape, Zr is decreased, to thereby change the temporary value of Zr. The increase and decrease ranges are, for example, 0.1 mass%. As necessary, in the present invention, the process of changing the temporary value of Zr is included in the fourth preparation process.

Step S8 and Step S3 are repeated until the desired characteristics are obtained. In this way, the content of Zr is adjusted to the appropriate amount.

(9) Step S9 (Fe amount adjustment)

For the sample obtained in any one of Steps S3 to S8, if it is required to improve tensile strength, 0.2% proof strength and elongation by controlling rough recrystallization, Fe is increased within a range meeting the conditions of the present invention, and if it is required to improve corrosion resistance, Fe is decreased, to thereby change the temporary value of Fe. The increase and decrease ranges are, for example, 0.1 mass%. In the present invention, the process of changing the temporary value of Fe constitutes the fourth preparation process.

Step S9 and Step S3 are repeated until the desired characteristics are obtained. In this way, the content of Fe is adjusted to the appropriate amount.

(10) The alloy composition can be determined by the aforementioned Steps S1 to S9. Also, for all alloy compositions, adjustments can be made together, but Steps S4 to S7 can be performed simultaneously and preferentially.

In addition, if it is required to improve the forging moldability due to the refinement of the ingot composition by forging the cast member, Ti is increased within a range meeting the conditions of the present invention, and if it is required to improve machine workability, Ti is decreased, to thereby change the temporary value of Ti. The increase and decrease ranges are, for example, 0.1 mass%.

In the present invention, as a continuous casting method, a conventionally known continuous casting method can be used. For example, casting methods, such as, e.g., a hot top vertical continuous casting method, a gas pressurizing hot top vertical continuous casting method, and a horizontal continuous casting method, can be used. Among them, a gas pressurizing hot top casting device is especially preferred.

In the case of the alloy composition of the present invention, it is required to satisfy the condition of "[maximum casting rate (mm/min) ] $\leqq$ -1.43 x [casting diameter (mm) + 500]" at the time of the continuous casting.

When the maximum casting rate is too fast, the DAS described below becomes rough, and if the rate is further increased, ingot cracking occurs, which is not preferable. In order to obtain an ideal structure, the casting rate needs to be inversely proportional to the casting diameter. Therefore, as explained above, the casting rate must be controlled so that the [maximum casting rate (mm/min)] becomes equal to or below "-1.43 x [casting diameter (mm)] + 500".

The lower limit of the casting rate presented for the casting plan is preferred to be 200 mm/min or more to prevent occurrence of surface defects of an ingot.

The casting rate and the maximum casting rate are as explained in the section [MEANS FOR SOLVING THE PROBLEMS].

In the present invention, it is necessary for the aforementioned Al alloy ingot to adjust the second dendrite arm spacing (DAS) to 40 $\mu$m or less.

If the DAS of the Al alloy ingot exceeds 40 $\mu$m, the mechanical strength decreases, and therefore the desired strength cannot be obtained and the elongation during plastic working decreases, and therefore it is not preferable.

Therefore, in the present invention, as described above, it is required to set the DAS to 40 $\mu$m or less, preferably 35 $\mu$m or less, more preferably 20 $\mu$m or less.

Next, in the present invention, a method for controlling the size of DAS will be explained.

Table 1

| Casting diameter [mm] | Maximum casting rate [mm/min] | DAS [$\bigcirc$:40 $\mu$m or less, $\times$ :exceeding 40 $\mu$m] |
|---|---|---|
| 40 | 420 | $\bigcirc$ |
| 40 | 550 | $\times$ |
| 50 | 400 | $\bigcirc$ |
| 50 | 500 | $\times$ |
| 70 | 380 | $\bigcirc$ |
| 70 | 450 | $\times$ |
| 120 | 380 | $\times$ |
| 150 | 250 | $\bigcirc$ |
| 150 | 310 | $\times$ |
| 210 | 205 | $\times$ |

Table 1 shows the relationship between the maximum casting rate and the DAS. As it is understood from Table 1, the maximum casting rate and DAS are in a close relationship, and the size of DAS can be controlled based on the maximum casting rate.

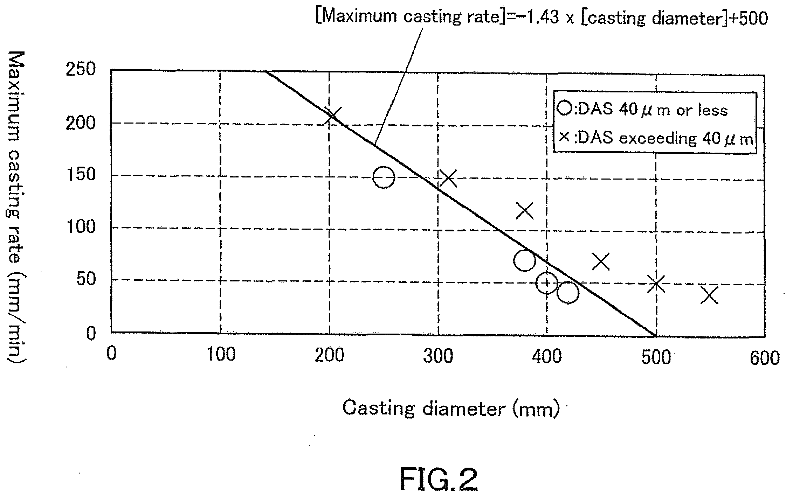

Fig. 2 is a graphical representation of the relationship between the maximum casting rate and the DAS, and the "$\bigcirc$" symbol in the drawing denotes the DAS of 40 $\mu$m or less and the "$\times$"symbol denotes the DAS exceeding 40 $\mu$m. Furthermore, the graph shows a straight line representing "[maximum casting rate (mm/min)] = -1.43 x [casting diameter (mm)] + 500".

As shown in the drawing, the DAS of 40 $\mu$m or less are arranged below the straight line and the DAS exceeding 40 $\mu$m are arranged above the straight line of "[maximum casting rate (mm/min)] = -1.43 x [casting diameter (mm)] + 500], and by satisfying the relationship of "[maximum casting rate (mm/min)] = -1.43 x [casting diameter (mm)] + 500]", as explained above, the size of DAS can be kept 40 $\mu$m or less.

In the present invention, the measurement of DAS is performed according to "Dendrite Arm Spacing Measurement Method" described in "Light Metal (1988), Vol. 38, No. 1, p45" published by Japan Institute of Light Metals.

In the Al alloy ingot of the present invention, the average particle diameter of crystallized substances needs to be adjusted to 8 $\mu$m or less, and more preferably adjusted to 1 $\mu$m or larger. In other words, if the average particle diameter of the crystallized substances is 8 μm or less, occurrences of forging cracking can be controlled because plastic workability during forging is excellent. Furthermore, the forged product becomes excellent in elongation, toughness, and fatigue strength, which prevents occurrence of forging cracking.

The average particle diameter can be measured by conventional methods, for example, a section method, using images in which crystalline structure is observed with a microscope, by the following procedures.

First, 100-power microphotography of the cross-sectional composition of the forged product is taken, and straight lines having vertical and horizontal lengths of L1 and L2, respectively, are arbitrarily drawn on the microphotography. Next, the number of grain boundaries existing in a shape intersecting the lines having the lengths L1 and L2 are counted and respectively labeled n1 and n2. The average particle diameter is calculated using the following Expression 1, which is defined as the average particle diameter of the crystallized substances calculated from the microphotography. The size of the average particle diameter can be calculated independent of the lengths of L1 and L2.

$$\texttt{Average particle diameter=(L1+L2)/(n1+n2) ...}$$

```
Expression 1
```

In the present invention, the "crystallized substance" denotes an Al-si series crystallized substance, an Al-Fe-Mn series crystallized substance, and an Al-Cu-Mg series crystallized substance crystallized in a granulated or flake shape on a crystal grain boundary.

In the present invention, the Al alloy ingot is subjected to a homogenization treatment to obtain an Al alloy cast member (welding Al alloy cast member).

In the present invention, the homogenization treatment is performed at a temperature of 400 to 600 ºC, preferably 430 to 500 ºC, for one hour or longer, preferably around 7 hours.

If the treatment temperature of the homogenization treatment is too low, since the diffusion rate of elements, such as, e.g., Mg, Zn, Cu, etc., as solute atoms, gets slow, microsegregation of solute atoms at the final coagulation portion remains, which may deteriorates the plastic workability during forging. Furthermore, when the treating time is less than one hour, since a time needed for diffusion of solute atoms cannot be secured, similar negative effects which occur when the treatment temperature is low may occur. Further, if the treatment temperature is higher than 600 ºC, the ingot may be locally dissolved, and therefore it is not preferable.

In the homogenization treatment, deposition of Zr intermetallic compounds which is effective to control recrystallization simultaneously occurs. The deposition of Zr intermetallic compounds can occur even at below 400 ºC (preferably below 430 ºC), but is not suited for a single-step aging treatment because a longer treatment is needed. If it exceeds 500 ºC, the deposition becomes uneven. Therefore, in the homogenization treatment, it is preferred to adjust the treatment temperature to 430 to 500 ºC.

In the Al alloy cast material of the present invention obtained as mentioned above, as a forging material, the forging load can be decreased. In addition, since it is excellent in plastic workability and therefore the formability during forging is excellent, it can be suitably used.

The Al alloy cast member as a forging material is hot forged under the heating conditions of the material temperature (preheating temperature) of 350 to 500 ºC to produce an Al alloy forged member. Preferably, the material temperature is set to 460 ºC or below.

Before putting the cast member as a forging material into a forging mold, normally, the cast member is subjected to mechanical processing (for example, cutting, , cutting of the surface layer) or further to plastic working (for example, upsetting) as needed.

Needless to say, the forging process can be performed multiple times.

If the material temperature during the hot forging treatment is lower than 350 ºC, the plastic workability during the forging deteriorates, which not only results in a failure of obtaining a forged product having a desired shape but also provides causes of damage to the mold and cracking of the forged product. If the temperature during the hot forging treatment is higher than 500 ºC, eutectic melting of the Al-Zn-Mg-Cu series crystallized substances at the surface portion occurs, causing hole defects near the surface of the forged product and aggregation of metals having low melting points on the surface layer portion. Therefore, in the present invention, it is preferable to set the temperature condition during the hot forging treatment to 350 to 500 ºC.

Further, in the present invention, the Al alloy forged member obtained in the aforementioned manner is subjected to a heat treatment as a solution heat treatment at a temperature of 400 to 500 ºC (preferably 460 ºC) to further improve the mechanical strength of the forged member. Specifically, for example, the forged member is maintained at 400 to 500 ºC for 2 to 8 hours and quenched by being put into water at 25 to 80 ºC.

In this solution heat treatment, if the treatment temperature is lower than 400 ºC, the solution amount of the deposition strengthening element decreases, resulting in a decreased deposition amount at the subsequent aging treatment, which in turn may results in a failure of securing sufficient mechanical strength. If the treatment temperature is higher than 500 ºC, eutectic melting may occur, which may cause hole defects near the surface of the forged product and aggregation of metals having low melting points at the surface layer portion of the forged product or therearound.

In the present invention, the Al alloy forged member to which the solution heat treatment was executed is subjected to a heat treatment as the single-step aging treatment to thereby obtain a heat treated Al alloy forged member (welding Al alloy forged member).

In the present invention, it is preferable that the device used for the single-step heat aging treatment is as short as possible in temperature-rising period and is capable of controlling the temperature with less temperature error at 100 to 300 ºC, for example, capable of controlling the temperature within an accuracy of ±3 ºC. Specifically, a hot air circulation electric furnace and a hot air circulating gas furnace can be exemplified. As to the temperature conditions, for example, the temperature is raised from room temperature (around 25 ºC) to 150 ºC at a rate of 150 ºC/hour, and then maintained at 130 to 170 ºC, preferably 150±5 ºC, for 8 to 12 hours, preferably 10±0.5 hours, and the temperature is decreased from 150 ºC to room temperature (25 ºC) at a rate of 30 to 300 ºC/hour.

The temperature-rising period is preferred to be short because the short temperature-rising period can shorten the heating treatment time, reduce variability of properties due to the heat treatment time, and improve the production efficiency.

In the present invention, in order to assuredly obtain an Al alloy forged member having the aforementioned characteristics, it is preferable that the temperature condition for the single-step aging treatment is set to 130 to 170 ºC, and the treatment time is set to 1 to 6 times the solution heat treatment time. In other words, it is preferable that the single-step aging treatment is performed at the conditions of 130 to 170 ºC x [solution heat treatment time x (1 to 6)].

In the present invention, after the solution heat treatment and before the single-step aging treatment, the time during which the Al alloy forged member is left at room temperature does not particularly affect the characteristics of the Al alloy forged member because Al-Cu-Mg series depositions are deposited first at room temperature. Therefore, the time during which the product is left at room temperature after the solution heat treatment can be freely set according to the arrangement of the production procedures of the product. For example, the single-step aging treatment can be performed immediately after performing the solution heat treatment, or the single-step aging treatment can be performed after the product is left at room temperature for a long time or an appropriate time after the solution heat treatment. As a result, the degree of freedom of the conditional setups of the production procedure increases, which is preferable.

In the present invention, it is required to adjust the DAS of the Al alloy ingot to 40 μm or less and to adjust the average particle diameter of the crystallized substances to 8 μm or less. The specific reasons are explained below.

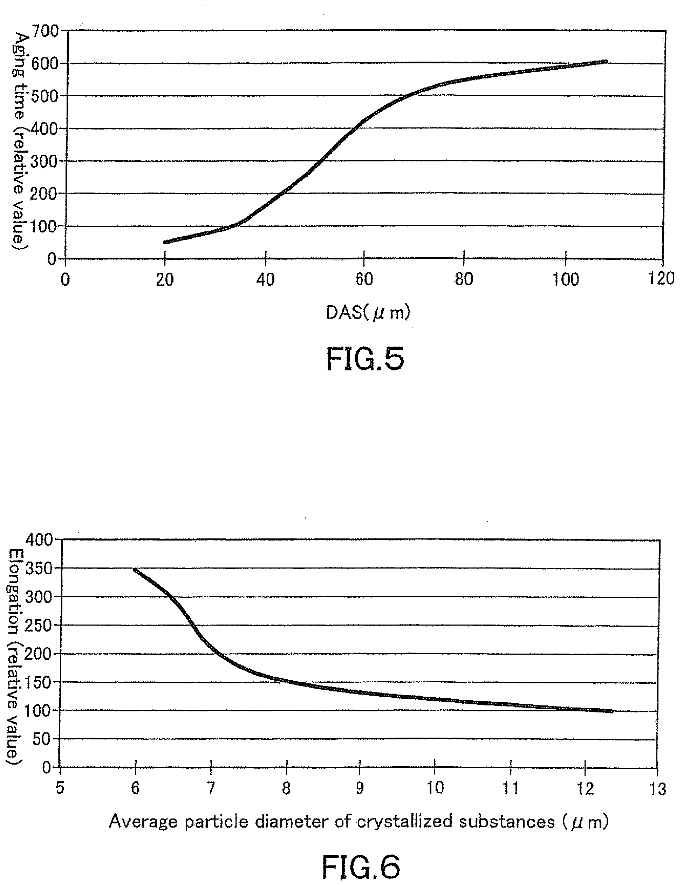

Fig. 5 is a graph showing the relationship between the DAS and the aging time for the aging treatment (single-step aging treatment). In the graph, the aging time denotes, as mentioned above, the time during which the hardness after the aging treatment becomes maximum. The graph shows the aging time with relative values wherein the aging time of a sample with the DAS of 33 μm was 100. Also, the aging temperature was set to 160 ºC, and the average particle diameter of the crystallized substances was adjusted to 7 μm.

As it is apparent from the graph, when the DAS is 40 μm or less, the aging time is shortened. That is, in the present invention, since the DAS is adjusted to 40 μm or less, the aging time can be shortened and the productivity rate can be improved. The reason for that is, when the DAS is small as in the present invention, the amount of solute atoms diffused through grain boundaries is large, and therefore even if the single-step aging treatment is performed, the diffusion rate of solute atom becomes faster. As a result, the aging treatment can be shortened.

The value of DAS can be controlled by the cooling rate of the ingot. That is, if the cooling rate becomes larger, the Das becomes small, and if the cooling rate becomes smaller, the DAS becomes larger.

As a reference, specific numeric data that is the basis of Fig. 5 (base data 1 to 4) are shown below. As explained above, in the following the base data, the aging time is shown as a relative value in which the standard value is 100. The average particle diameters of the crystallized substances are all adjusted to 7 μm.

Base data 1: DAS=108 μm, aging time=600
Base data 2: DAS=51 μm, aging time=300
Base data 3: DAS=39 μm, aging time=150
Base data 4: DAS=33 μm, aging time=100 (standard value)

Fig. 6 is a graph showing the relationship between the average particle diameter of crystallized substances and the elongation after the aging treatment (single-step aging treatment) . In the graph, the elongation was measured after the solution heat treatment of 460 ºC x 4 hours, the water quenching treatment at water temperature of 65 ºC, and the aging treatment of 160 ºC x 8 hours. The elongation is a relative value wherein the elongation of a sample having an average particle diameter of 12.4 μm is set to 100. The DAS was adjusted to 35 μm.

As it is apparent from the graph, when the average particle diameter is 8 μm or less, the elongation was large.

That is, in the present invention, because the average particle diameter is adjusted to 8 $\mu$m or less, the forging member having larger elongation and having excellent mechanical properties can be obtained.

As a reference, specific numeric data that is the basis of Fig. 6 (base data 11 to 14) are shown below. As explained above, in the following base data, the elongation is shown as a relative value in which the standard value is 100. Also, the DAS were all adjusted to 35 $\mu$m.

Base data 11: crystallized substance=12.4, elongation=100 (standard value)
Base data 12: crystallized substance=8.0, elongation=150
Base data 13: crystallized substance=6.8, elongation=250
Base data 14: crystallized substance=6.5, elongation=300

In addition, in the graphs in Figs. 5 and 6, in the following Example 1, the casting diameter and the casting rate were changed based on Table 1 and Fig. 2 to adjust the size of DAS and the size of the crystallized substance.

In the present invention, the Al alloy forged member to which heat treatments, such as, e.g., the solution heat treatment and the single-step aging treatment, were performed, can be suitably used as a member to be joined for a high-strength Al alloy joined body to be obtained by integrally welding a plurality of Al alloy joining members.

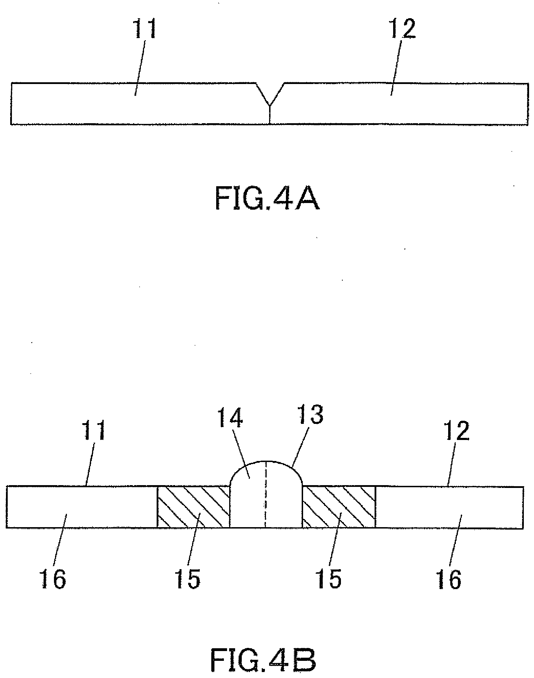

For example, as shown in Fig. 4A, by welding the Al alloy forged member 11 of the present invention to another Al alloy member to be joined (another joining member) 12, as shown in Fig. 4B, an Al alloy joined body (Al alloy welded structural body) is assembled.

The aforementioned another member 12 to be joined can be an Al alloy member with a decreased amount of hydrogen gas, and can also be an Al alloy member to be joined having similar composition. For example, as the aforementioned another member 12 to be joined, a member made of the heat treated Al alloy forged material of the present invention, a member made of an Al extruded material obtained by extruding the aforementioned Al alloy cast member, a member made of an Al cast obtained from the aforementioned Al alloy melt, and a member made of an aluminum die cast product. Among them, it is preferable to use a member made of the heat treated Al alloy forged member of the present invention. In this case, since heat treated Al alloy forged members of the present invention are joined, the metal structure and metal compositions of the members become equalized and they can be welded efficiently and strong.

Furthermore, the welding method used in the present invention is not especially limited, and any publicly known methods can be used. For example, welding methods, such as, a TIG welding and a MIG welding, can be used. As a butt joining method, a variety of methods, such as, e.g., butt joint, corner joint, T-joint, and lap splice, can be used.

In the heat treated Al alloy forged member of the present invention, the quenching sensitivity is dull because the additive amount of Cu is kept to 0.1 to 0.4 mass%. Therefore, by merely being naturally cooled after raising the temperature of the Al alloy forged member to a high temperature during welding, the Al alloy forged member is quenched. As a result, by just leaving the member as it is, the member is naturally aged, which increases the hardness. Therefore, since the member is excellent in hardness recovery performance after welding and has a sufficient strength, sufficient hardness can be secured when the Al alloy forged members as joining members 11 and 12 are welded in a butted state as shown in Fig. 4A to produce an Al alloy joined body 10 as shown in Fig. 4B.

In the present invention, since Cu is adjusted to 0.1 to 0.4 mass%, the single-step aging of the present invention can be performed. Because of the single-step aging treatment of the present invention, the difference in hardness between the non-heat affected portion and the heat-affected portion becomes small. As a result, the hardness recovery performance of the entire member as an Al alloy joined body is improved.

As shown in the drawings, when the members to be joined 11 and 12 are welded together, even if the build-up welded portion 14 of the welded portion 13 has decreased in hardness due to adverse effects, since the portion has a large cross-section area and has a large withstand load, there will not have problems such as fracturing. On the other hand, the heat-affected portion 15 near the build-up welded portion 14 has no change in the cross-section area and is small in cross-section area. Therefore, if the heat-affected portion is annealed with the welding heat, the hardness decreases, which may cause a problem such as fracturing. However, the Al alloy forged members (members to be joined) 11 and 12 of the present invention are excellent in hardness recovery performance after welding, and therefore the heat-affected portion 15 can sufficiently recover hardness and assuredly secure the desired hardness after welding.

Specifically, in the present invention, the hardness of the heat-affected portion 15 of the Al alloy welded body 15 has a ratio of 0.8 or more to the average hardness of another portion 16 not affected by the welding heat, and sufficient hardness can be secured. Numerically, the relationship of $V_1/V_2 \geqq 0.8$ is established, where the hardness of the heat-affected portion 15 (Vickers hardness) is "$V_1$" and the hardness (Vickers hardness) of another portion 16 not affected by heat is "$V_2$".

In other words, because the "hardness recovery performance" is excellent, the hardness of the welded portion becomes roughly the same hardness as the base material that is not affected by welding. As a result, "$V_1/V_2 \geqq 0.8$" is satisfied.

Therefore, the Al alloy joined body (Al alloy product) obtained by the production method of the present invention has an alloy composition consisting of Fe: 0.2 to 0.35 mass%, Cu: 0.1 to 0.4 mass%, Mn: 0.3 to 0.6 mass%, Mg: 2.0 to 2.5 mass%, Zn: 5.0 to 5.5 mass%, Zr: 0.1 to 0.2 mass%, Ti: 0.2 mass% or less, and the balance being Al and inevitable impurities, and the hardness of the heat-affected portion 15 has a ratio of 0.8 or more to the average hardness of another portion 16 not affected by the welding heat.

Needless to say, the portion not affected by the welding heat (another portion 16) can maintain sufficient strength because the hardness does not decrease by the welding heat.

The Al alloy joined body obtained by the production method of the present invention can be used as a member for a high-strength Al alloy welded structure.

As a member for a high-strength welding structure, for example, a golf club head, a motorcycle fuel tank, a motorcycle frame, a motorcycle swing arm, a four-wheel vehicle sub-frame, a four-wheel bumper beam, a four-wheel vehicle steering column shaft, and parts for a railroad vehicle structure, can be exemplified.

For reference, in the case of a conventional Al-Zn-Mg series alloy forged member disclosed in the aforementioned Patent Document 2 (Unexamined Laid-open Japanese Patent Application Publication No. S57-158360), the aging time needs to be a maximum of 32 hours (a total of 32 hours, i.e., 16 hours for the first step and 16 hours for the second step). On the other hand, the time required for a common solution heat treatment is 2 to 8 hours. Therefore, in order to continuously perform a solution heat treatment and an aging treatment, the time for the solution heat treatment and the time for the aging treatment must be balanced. For example, the aging treatment furnace for the aging treatment requiring a long time must be set up 5 times more than the solution heat treatment furnace for the solution heat treatment that can be performed in a short time, which not only increases the facility introduction cost but also increases the facility size. Furthermore, it is cumbersome to develop a production plan, and the production efficiency deteriorates.

On the other hand, in the case of using the production method of the present invention, the aging treatment time can be 12 hours at most and can be adjusted to a time that does not differ a lot from the solution heat treatment time. Also, in the present invention, since the aging treatment is a simple single-step aging treatment, it is not required for the temperature control for the furnace used for the aging to perform a control by a complex program, and therefore a heating furnace having a simple temperature control function can be used. Specifically, as explained above, the aging treatment time is 1 to 6 times the solution heat treatment time (aging treatment time/solution heat treatment time = 1 to 6). As a result, it is sufficient to introduce a production facility having the same number of the aging treatment furnaces with respect to the solution heat treatment furnaces and the same treatment function, enabling a reduction of the facility introduction cost, a miniaturization of the facility, and an easy production planning, which further improves the productivity.

Since the solution heat treatment and the aging treatment can be continuously performed within 20 hours with small and compact facilities, the lead time for production can be shortened, and the stock quantity of products can be reduced. Furthermore, the total time for performing the solution heat treatment and the aging treatment can be within 20 hours. Therefore, for example, a production can be effectively performed in a flow in which the solution heat treatment and the aging treatment are performed in an automated furnace, the treating member (Al alloy forged member) is set in the furnace and the treatment operations are started during the day and continued during the night, the treating member is taken out during the day of the next day, and the next treating member is set.

Further, since the aging time can be shorten, the amount of fuel required for the aging treatment can be reduced, which sufficiently contributes to reduction of carbon dioxide emission, which is a big social problem in the recent years.

Furthermore, since the Al alloy of the present invention is high in strength as compared to a conventional Al-Zn-Mg series alloy, in cases where, for example, it is used as a vehicle component, the component can be further reduced in size and weight, which in turn can further improve the environmental performance and the maneuverability of a vehicle.

As explained above, in the treating member as a forged member of the present invention, it becomes possible to be subjected to a simple single-step aging treatment. Therefore, it becomes possible to employ a production system (production device) in which the object is carried with a carrying device in a tunnel furnace that is constantly controlled at a certain temperature for the solution heat treatment and in the tunnel furnace that is constantly controlled at a certain temperature for the aging treatment.

Especially in the present invention, it is preferred that a continuous heat treatment furnace in which a solution heat treatment furnace, a quenching water tank, and an aging furnace are connected by a carrying conveyor (known conveyors, such as, e.g., a conveyor or a roller conveyor).

Next, an example of a continuous heat treatment furnace as a device for producing the Al alloy joined body of the present invention will be explained with reference to a drawing.

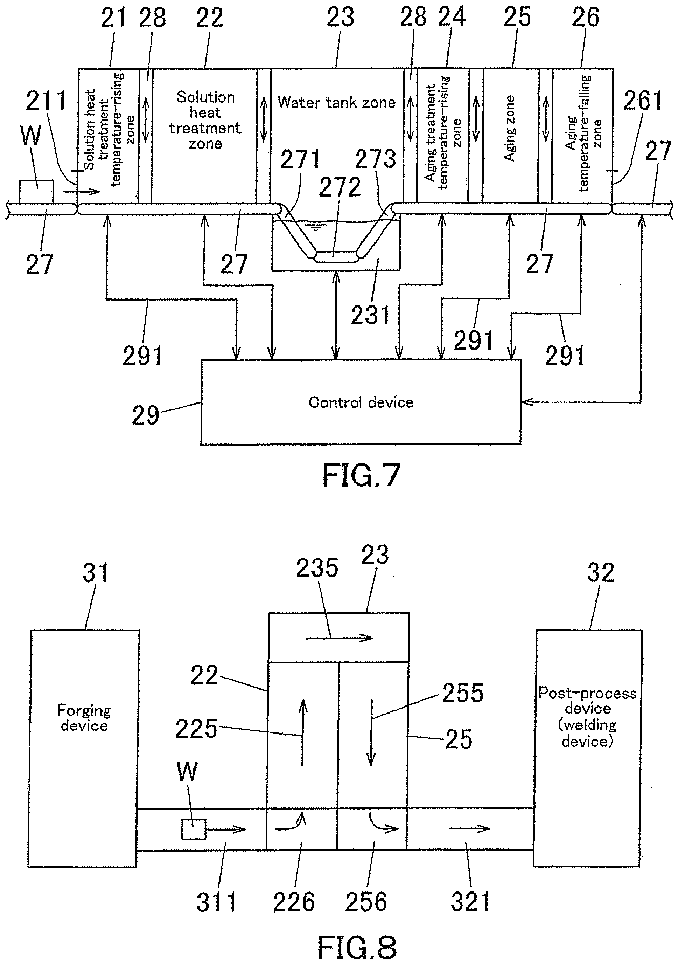

Fig. 7 is a block diagram explaining an example of a continuous heat treatment furnace. As shown in this figure, in this continuous heat treatment furnace, from the upstream side to the downstream side of the carrying path of the Al alloy forged member as the treating member W, a solution heat treatment temperature-rising zone 21, a solution heat treatment zone 22, a water tank zone 23, an aging temperature-rising zone 24, an aging zone 25 and an aging temperature-falling zone 26 are arranged in this order.

The solution heat treatment temperature-rising zone 21 (heat treatment zone for rising a temperature for a solution heat treatment) is configured to heat up the treating member W to the solution heat treatment temperature. The solution heat treatment zone (heat treatment zone for a solution heat treatment) 22 is configured to maintain the treating member W at a solution heat treatment temperature. The water tank zone 23 is configured to perform a quenching treatment by immersing the treating member W into water. The aging temperature-rising zone (heat treatment zone for rising a temperature for an aging) 24 is configured to heat up the treating member W to the aging temperature. The aging zone (single-step aging heating treatment zone) 25 is configured to maintain the treating member W at an aging temperature. The aging temperature-falling zone (heat treatment zone for rising a temperature for an aging treatment) 26 is configured to cool down the treating member W to around room temperature.

In this embodiment, among a plurality of zones 21 to 26, the zones excluding the water tank zone 23 are called heat treatment zones.

Each of the heat treatment zones 21, 22, and 24 to 26 is constituted by, e.g., a temperature-controllable heating furnace (heat treatment furnace). Each heating furnace can be controlled at different temperatures.

For example, in cases where each heating furnace is a combustion furnace utilizing a combustion heat of fuel, the fuel amount for combustion is controlled for each fuel furnace (each heat treatment zone). Also, in cases where each heating furnace is an electric furnace, the amount of electricity supplied to each heating furnace (each heat treatment zone) is controlled.

A plurality of carrying conveyors 27 are provided from the upstream side of the solution heat treatment temperature-rising zone 21 to the downstream side of the aging treatment temperature-falling zone 26 so that the treating member passes each of the zones 21 to 26. In this embodiment, the carrying conveyor 27 constitutes a carrying device for carrying the treating member W.

The water tank zone 23 is provided with, for example, a water tank 231 storing water.

The carrying conveyor 27 arranged in the water tank zone 23 is provided with a taking-in conveyor 271, an underwater carrying conveyor 272, and a taking-out conveyor 273 so that the the treating member W can be taken into water and then taken out from water.

The taking-in conveyor 271 is tilted in such a manner that the upstream side is arranged over the water and the downstream side is arranged underwater. The underwater carrying conveyor 272 is arranged horizontally in such a manner that the upstream side is arranged corresponding to the downstream side of the taking-in conveyor 271 and the entire conveyor is arranged underwater. The taking-out conveyor 273 is tilted in such a manner that the upstream side is arranged underwater so as to correspond to the downstream side of the underwater carrying conveyor 272 and the downstream side is arranged over the water.

The treating member W carried to the water tank zone 23 from the solution heat treatment zone 22 is taken into the water in the water tank 231 by the taking-in conveyor 271 and transferred to the underwater carrying conveyor 272. Further, the treating member W is carried through the water with the underwater carrying conveyor 272 and transferred to the taking-out conveyor 273. Further, the treating member W is carried by the taking-out conveyor 273 to be taken out of the water and transferred to the aging treatment temperature-raising zone 24 by the conveyor 27.

In the present invention, the aforementioned taking-in means for taking the treating member W into the water tank 23 is not limited to the taking-in conveyor 271. For example, it can be configured such that the taking-in conveyor 271 is arranged horizontally over water and a step is formed between the downstream side of the taking-in conveyor 271 and the underwater carrying conveyor 272 so that the treating member W can be transferred to the underwater carrying conveyor 272 from the taking-in conveyor 271 via the step. Further, it can be configured such that a taking-in means, such as, e.g., a lifter, is used to transfer the treating member W from out of water to underwater. The taking-in mechanism constitutes the carrying device.

In the present invention, as a taking-out means for taking the treating member W out of water from the underwater carrying conveyor 272 in the water tank, a lifter, etc., can be used. This taking-out mechanism constitutes the carrying device.

Also, each carrying conveyor 27 is constituted by a known conveyor, such as, e.g., a belt conveyor or a roller conveyor.

The treating member W disposed on the upstream side of the solution heat treatment temperature-rising zone 21 on the carrying conveyor 27 is carried by the carrying conveyors 27, introduced into the solution heat treatment temperature-rising zone 21 through the introduction opening 211, sequentially and continuously passed through each of the zones 21 to 26, and carried to the downstream side of the aging temperature-falling zone 26 through the discharge opening 261.

Also, an openable and closable partitioning door 28 is disposed between respective adjacent zones 21 to 26 so that when the treating member travels between the adjacent zones 21 to 26 by the conveyor 27, the corresponding partitioning door 28 is opened to allow the movement of the treating member between the adjacent zones.

In this embodiment, the length of each of the zones 21 to 26 (carrying distance by the conveyor 27) is adjusted based on the length of the treatment time needed for each of the zones 21 to 26 so that a predetermined treatment of the treating member W can be performed by each of the zones 21 to 26 when the treating member W continuously moves through each of the zones 21 to 26 at a constant speed by the conveyors 27.

Further, in this continuous heat treatment furnace of this embodiment, a control device 29 is provided. The control device 29 is configured to control driving of a heating driving mean, such as, e.g., a heater for heating the inside of each heat treatment zone 21, 22 and 24 to 26, a driving means, such as, e.g., a motor for driving the rotation of the conveyor 27, and a driving means, such as, e.g., a motor for opening and closing the door 28, via signal lines 291 to perform the predetermined treatment for the treating member W at each zone.

The treating member W introduced into the solution heat treatment temperature-rising zone 21 by the conveyor 27 is heated up to a predetermined solution heat treatment temperature while it passes through the zone 21.

Furthermore, the treating member W introduced into the solution heat treatment zone 22 from the solution heat treatment temperature-rising zone 21 is maintained at a solution heat treatment temperature while it passes through the zone 21(22 で は ?) to perform the solution heat treatment.

Also, the treating member W introduced into the water tank zone 23 from the solution heat treatment zone 22 is subjected to a quenching treatment by passing through the water inside the water tank.

Also, the treating member W introduced into the aging temperature-rising zone 24 from the water tank zone 23 is heated up to a predetermined aging temperature while it passes through the zone 24.

In addition, the treating member W introduced into the aging zone 25 from the aging temperature-rising zone 24 is maintained at an aging temperature while it passes through the zone 25 and is subjected to an aging treatment.

Furthermore, the treating member W introduced into the aging temperature-falling zone 26 from the aging zone 25 is cooled to a predetermined temperature (around room temperature) while it passes through the zone 26.

As explained above, according to the aforementioned example of a continuous heat treatment furnace, the treating member W introduced from the introduction opening 211 is carried by the carrying conveyors 27, sequentially passes through each of the zones 21 to 26, subjected to predetermined heat treatments such as a solution heat treatment, an aging treatment and a quenching treatment, and is discharged from the discharge opening 261. In this way, the solution heat treatment, the quenching treatment and the aging treatment can be performed automatically in a simple manner, which can improve the production efficiency.

By using such a continuous heat treatment furnace, troublesome operations such as raising and lowering the furnace temperature as in a batch-series furnace are not required. Therefore, the continuous heat treatment furnace of this embodiment can stabilize the temperature condition inside the furnace of each zone, enabling more stable temperature maintenance, which in turn can further improve the product quality.

In the example of the continuous heat treatment furnace as shown in Fig. 7, it is provided with the solution heat treatment temperature-rising zone 21 for heating up the treating member W to the solution heat treatment temperature, the aging temperature-rising zone 24 for heating up the treating member W to the aging temperature, and an aging temperature-falling zone 26 for cooling down the aging-treated treating member W to room temperature. However, in the present invention, it should be noted that these zones 21, 24 and 26 do not always need to be provided.

In cases where a temperature control for heating the introduced treating member W to a solution heat treatment temperature is important, it is preferable to provide a solution heat treatment temperature-rising zone before the solution heat treatment zone. Furthermore, in cases where a temperature control for heating the treating member to an aging temperature is important, it is preferable to provide an aging temperature-rising zone before the aging zone. Furthermore, in cases where a temperature control for cooling down the temperature of the treating member from the aging temperature to room temperature is important, it is preferable to provide an aging temperature-falling zone after the aging zone.

In the continuous heat treatment furnace as shown in Fig. 7, the partitioning door 28 is provided between the adjacent zones of the plurality of zones 21 to 26. In the present invention, however, it is not always required to provide such partitioning doors 28. It is preferable to provide a partitioning door between the adjacent zones of the plurality of zones in view of the fact that the temperature interference between the adjacent zones can be effectively prevented by arranging the partitioning doors.

In the case of the treating member W as an Al alloy joined body of the present invention, the aging treatment time can be adjusted to a time that does not largely differ from the solution heat treatment time. Specifically, the aging treatment / the solution heat treatment = 1 to 6.

For this reason, in the present invention, a continuous heat treatment furnace as shown in Fig. 8 can be used. The continuous heat treatment furnace is arranged between the forging device 31 and the post-process device 32 such as a welding device, and is provided with a solution heat treatment zone 22, a water tank zone 23, and an aging zone 25.

Between the forging device 31 and the post-process device 32, the solution heat treatment zone 22 and the aging zone 25 are arranged parallel to each other, and the carrying conveyor 225 for carrying the treating member W in the solution heat treatment zone 22 and the carrying conveyor 255 for carrying the treating member W in the aging zone 25 are arranged in parallel with each other in a direction opposite with each other. Further, the downstream side of the solution heat treatment zone 22 and the upstream side of the aging zone 25 are arranged correspondingly, and the upstream side of the solution heat treatment zone 22 and the downstream side of the aging zone 25 are arranged correspondingly.

Further, the upstream side (introduction opening) of the water tank zone 23 is arranged corresponding to the downstream end portion of the solution heat treatment zone 22, and the downstream side (discharge opening) of the water tank zone 23 is arranged corresponding to the upstream side end portion of the aging zone 25. In this way, the treating member W carried into the water tank zone 23 from the solution heat treatment zone 22 passes through the water tank zone 23 by the conveyor 235 and is carried into the aging zone 25. In this way, the treating member W that passed through the solution heat treatment zone 22 turns (U-turns) near the water tank zone 23 and passes through the aging zone 25.

The conveyor 235 arranged in the water tank zone, similar to the continuous heat treatment furnace as shown in Fig. 7, can pass the treating member W underwater in the water tank.

The treatment time of the solution heat treatment and the treatment time of the aging treatment are different with each other. Therefore, if the carrying conveyors 225 and 255 of the solution heat treatment zone 22 and the aging zone 25 are set to the same carrying rate (speed), the length of the solution heat treatment zone 22 and the length of the aging zone 25 should be different from each other. However, by adjusting the carrying rate (speed) of each carrying conveyor 225 and 255 of the solution heat treatment zone and the aging zone 25, it becomes possible to match the length of the solution heat treatment zone 22 and the length of the aging zone 25.

A turn table 226 is arranged on the upstream side of the solution heat treatment zone 22, and a carrying conveyor 311 is arranged between the turn table 226 and the forging device 31. Therefore, the treating member W carried out from the forging device 31 is carried to the turn table 226 by the carrying conveyor 311, and after its direction is adjusted by rotating with the turn table 226, the treating member W is introduced into the solution heat treatment zone 22.

A turn table 256 is arranged on the downstream side of the aging zone 25, and a carrying conveyor 321 is arranged between the turn table 256 and the post-process device 32. Therefore, the treating member W carried out from the aging zone 25 is turned with the turn table 256 to adjust its direction and later carried to the post-process device 32 by the carrying conveyor 321.

Although not illustrated, it is configured such that the driving of each conveyor and turn table and the temperature of each heat treatment zone are controlled by similar control devices as in the continuous heat treatment furnace as shown in Fig. 7.

In the continuous heat treatment furnace, the treating member W as an Al forged member forged by the forging device 31 is carried into the solution heat treatment zone 22 through the conveyor 311 and the turn table 226, and subjected to a solution heat treatment by being passed through the solution heat treatment zone 22.

The treating member W carried into the water tank zone 23 from the solution heat treatment zone 22 is subjected to a quenching treatment by being passed through the water in the water tank.

Furthermore, the treating member W introduced into the aging zone 25 from the water tank zone 23 is subjected to an aging treatment by being passed through the aging zone 25.

After being subjected to the aging treatment, the treating member W is carried to the post-process device 32 by the turn table 256 and the carrying conveyor 321, and is subjected to welding.

As explained above, also in this continuous heat treatment furnace, in the same manner as mentioned above, the solution heat treatment, the quenching treatment, and the aging treatment can be automatically and continuously performed, and therefore the production efficiency can be improved.

Furthermore, in this continuous heat treatment furnace, the solution heat treatment zone 22 and the aging zone 25 are arranged parallel to each other with their carrying directions directed in opposite directions, and the treating member W passed through the solution heat treatment zone 22 U-turns near the water tank zone 23 and passes through the aging zone 25. Therefore, the discharge opening of the solution heat treatment zone 22 (introduction opening of the water tank zone 23) and the introduction opening of the aging zone 25 (discharge opening of the water tank zone 23) can be formed on one side wall (one wall surface) of the water tank zone 23. As a result, the solution heat treatment zone 22 and the aging zone 25 can be arranged at an arbitrary position between the forging device 31 and the post-process device (for example, welding device) 32. This increases the freedom of design, which in turn can construct a production system (production device) in which each zone is arranged at the most ideal position.

In cases (not according to the invention) where the solution heat treatment and/or the aging treatment is not needed, the continuous heat treatment furnace including the heat treatment zones 22 and 25 can be separated from the process conveyor to directly connect the forging device to the post-process device (welding device). This results in a production system in which the distance from the forging device to the post-process device (welding device) is shortened.

Also in the continuous heat treatment furnace as shown in Fig. 8, in the same manner as in the continuous heat treatment furnace as shown in Fig. 7, as needed, a solution heat treatment temperature-rising zone, an aging temperature-rising zone, and an aging temperature-falling zone can be set up. Furthermore, as needed, partitioning doors can be formed between the adjacent zones of the plurality of zones.

[EXAMPLES]

Next, Examples according to the present invention and Comparative Examples which deviate from the gist of the present invention will be explained in detail.

[Table 2A]

| | Composition analysis value (mass%) | | | | | | | Homogenization treatment temperature (°C) | Forging preheating temperature (°C) | Solution heat treatment temperature (°C) | Aging treatment condition | |
| --- | --- | --- | --- | --- | --- | --- | --- | --- | --- | --- | --- | --- |
| | Fe | Cu | Mn | Mg | Zn | Zr | Ti | | | | Temp. (°C) | Hour (hr) |
| Invention range | 0.2-0.35 | 0.1-0.4 | 0.3-0.6 | 2.0-2.5 | 5.0-5.5 | 0.1-0.2 | ≦0.1 | 400-600 | 350-500 | 400-500 | 130-170 | 8-12 |
| Ex. 1 | 0.25 | 0.30 | 0.51 | 2.25 | 5.26 | 0.15 | 0.04 | 460 | 450 | 460 | 150 | 10 |
| Ex. 2 | 0.25 | 0.11 | 0.49 | 2.05 | 5.27 | 0.14 | 0.05 | 460 | 450 | 460 | 150 | 10 |
| Ex. 3 | 0.22 | 0.10 | 0.52 | 2.30 | 5.22 | 0.16 | 0.03 | 460 | 450 | 460 | 150 | 10 |
| Ex. 4 | 0.25 | 0.30 | 0.51 | 2.25 | 5.26 | 0.15 | 0.04 | 460 | 450 | 460 | 135 | 12 |
| Ex. 5 | 0.2 | 0.4 | 0.3 | 2.2 | 5 | 0.1 | 0.04 | 460 | 450 | 460 | 150 | 10 |
| Ex. 6 | 0.35 | 0.3 | 0.6 | 2.5 | 5.2 | 0.2 | 0.04 | 460 | 450 | 460 | 150 | 10 |
| Ex. 7 | 0.25 | 0.3 | 0.51 | 2.25 | 5.5 | 0.15 | 0.04 | 460 | 450 | 460 | 150 | 10 |
| Comp. Ex. 1 | 0.11 | 0.31 | 0.49 | 2.21 | 5.23 | 0.13 | 0.05 | 460 | 450 | 460 | 150 | 10 |
| Comp. Ex. 2 | 0.55 | 0.33 | 0.58 | 2.23 | 5.41 | 0.19 | 0.09 | 460 | 450 | 460 | 150 | 10 |
| Comp. Ex. 3 | 0.24 | 0.01 | 0.44 | 2.49 | 5.45 | 0.15 | 0.04 | 460 | 450 | 460 | 150 | 10 |
| Comp. Ex. 4 | 0.25 | 0.08 | 0.43 | 1.89 | 5.48 | 0.15 | 0.05 | 460 | 450 | 460 | 150 | 10 |
| Comp. Ex. 5 | 0.25 | 0.70 | 0.47 | 2.30 | 5.44 | 0.15 | 0.06 | 460 | 450 | 460 | 150 | 10 |
| Comp. Ex. 6 | 0.33 | 0.36 | 0.05 | 2.25 | 5.40 | 0.14 | 0.05 | 460 | 450 | 460 | 150 | 10 |
| Comp. Ex. 7 | 0.33 | 0.36 | 0.90 | 2.25 | 5.40 | 0.14 | 0.04 | 460 | 450 | 460 | 150 | 10 |
| Comp. Ex. 8 | 0.25 | 0.31 | 0.47 | 1.25 | 5.12 | 0.13 | 0.05 | 460 | 450 | 460 | 150 | 10 |
| Comp. Ex. 9 | 0.21 | 0.33 | 0.54 | 3.55 | 5.48 | 0.16 | 0.05 | 460 | 450 | 460 | 150 | 10 |
| Comp. Ex. 10 | 0.25 | 0.15 | 0.51 | 2.10 | 4.25 | 0.15 | 0.04 | 460 | 450 | 460 | 150 | 10 |
| Comp. Ex. 11 | 0.25 | 0.35 | 0.51 | 2.44 | 6.50 | 0.15 | 0.04 | 460 | 450 | 460 | 150 | 10 |
| Comp. Ex. 12 | 0.25 | 0.30 | 0.43 | 2.23 | 5.21 | 0.01 | 0.05 | 460 | 450 | 460 | 150 | 10 |
| Comp. Ex. 13 | 0.24 | 0.30 | 0.43 | 2.23 | 5.21 | 0.01 | 0.05 | 460 | 450 | 460 | 150 | 10 |
| Comp. Ex. 14 | 0.24 | 0.30 | 0.51 | 2.25 | 5.26 | 0.15 | 0.04 | 200 | 450 | 460 | 150 | 10 |
| Comp. Ex. 15 | 0.25 | 0.30 | 0.51 | 2.25 | 5.26 | 0.15 | 0.04 | 650 | 450 | 460 | 150 | 10 |
| Comp. Ex. 16 | 0.25 | 0.30 | 0.51 | 2.25 | 5.26 | 0.15 | 0.04 | 460 | 200 | 460 | 150 | 10 |
| Comp. Ex. 17 | 0.25 | 0.30 | 0.51 | 2.25 | 5.26 | 0.15 | 0.04 | 460 | 650 | 460 | 150 | 10 |
| Comp. Ex. 18 | 0.25 | 0.30 | 0.51 | 2.25 | 5.26 | 0.15 | 0.04 | 460 | 450 | 300 | 150 | 10 |
| Comp. Ex. 19 | 0.25 | 0.30 | 0.51 | 2.25 | 5.26 | 0.15 | 0.04 | 460 | 450 | 650 | 150 | 10 |
| Comp. Ex. 20 | 0.25 | 0.30 | 0.51 | 2.25 | 5.26 | 0.15 | 0.04 | 460 | 450 | 460 | 120 | 10 |
| Comp. Ex. 21 | 0.25 | 0.30 | 0.51 | 2.25 | 5.26 | 0.15 | 0.04 | 460 | 450 | 460 | 200 | 10 |
| Comp. Ex. 22 | 0.25 | 0.30 | 0.51 | 2.25 | 5.26 | 0.15 | 0.04 | 460 | 450 | 460 | 150 | 4 |
| Comp. Ex. 23 | 0.25 | 0.30 | 0.51 | 2.25 | 5.26 | 0.15 | 0.04 | 460 | 450 | 460 | 150 | 24 |

As shown in Table 2A, in order to make each sample of Examples 1 to 7 and Comparative Examples 1 to 23, Al alloys each having a composition corresponding to each sample were melted and after being subjected to a degassing treatment and an inclusion removal treatment by flux, a Ti-B refinement material was added at the degassing treatment furnace immediately before the casting to prevent faults in refinement of the ingot due to reaction of Ti and Zr.

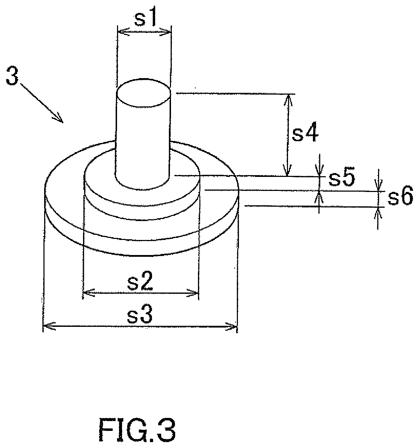

These Al alloy melts each corresponding to samples obtained in this way were cast into molds to obtain disc samples each having a shape as shown in Fig. 3, and were analyzed with an emission spectrochemical analysis according to in JIS H 1305.

Various sizes s1 to s6 of the disc samples 3 were as follows. S1 was 18 mm, s2 was 30 mm, s3 was 50 mm, s4 was 35 mm, s5 was 5 mm, and s6 was 5mm.

As a result of the analysis, after confirming that each sample with the target composition value as shown in Table 2A was obtained, the Al alloy melt corresponding to each sample was continuously cast using a gas pressurizing hot top casting machine, and Al alloy cast members (ingots) corresponding to each sample were made. As the casting condition during casting, round bars were continuously cast while adjusting the melt temperature immediately before casting was higher than the liquidus temperature (650 $\underline{o}$C).

For the samples after casting, existence of cracking on the sample surfaces was checked by a solvent removal liquid penetrant examination (color check).

After the ingot corresponding to each sample obtained in that way was subjected to an outer perimeter cutting process with a turning machine so that the diameter became 60 mm, it was cut into a certain length, and subjected to a homogenization treatment under the conditions as shown in Table 2A. For the sample after the homogenization treatment, the surface condition was checked visually for presence of local melting. Then, the continuously cast round-bar after the homogenization treatment was cut into a length of 80 mm to make the forging material corresponding to each sample.

After pre-heating the forging material under the conditions as shown in Table 2A, the material was upset from the round-bar side surface direction to a thickness of 35 mm. Before the upsetting, the surface conditions were checked visually for presence of local melting. Also, after the upsetting, the presence of cracking on the sample surface was checked by a solvent removal liquid penetrant examination (color check). After maintaining the upset product (forged member) for 3 hours at the solution heat treatment temperature as shown in Table 2A, the product was annealed, and immediately subjected to the aging treatment under the conditions as shown in Table 2A. The surface condition of the sample after the solution heat treatment was visually checked for presence of local melting.

For each sample after the solution heat treatment, samples subjected to a two-step aging treatment were also prepared for comparison. That is, each sample after the solution heat treatment was subjected to a first aging treatment for maintaining 110 $\underline{o}$C for 6 hours, and following by a second aging treatment for maintaining 150 $\underline{o}$C for 8 hours, to also prepare each sample with a two-step aging treatment.

[Table 2B]

| | Composition analysis value (mass%) | | | | | | | Homogenization treatment | | Solution heat treatment | | Aging treatment time | | Aging treatment time/ solution heat treatment time |
|---|---|---|---|---|---|---|---|---|---|---|---|---|---|---|
| | Fe | Cu | Mn | Mg | Zn | Zr | Ti | Temperature (°C) | Time (Hr) | Temperature (°C) | Time (Hr) | Temperature (°C) | Time (Hr) | |
| Invention range | 0.2-0.3 5 | 0.1-0.4 | 0.3-0.6 | 2.0-2.5 | 5.0-5.5 | 0.1-0.2 | ≦ 0.1 | 400-600 | 1 hour or more | 400-500 | 2-8 | 130-170 | 8-12 | 1-6 |
| Ex. 1 | 0.2 5 | 0.30 | 0.51 | 2.25 | 5.26 | 0.15 | 0.04 | 460 | 1 | 460 | 5 | 150 | 10 | 2 |
| Ex. 2 | 0.2 5 | 0.30 | 0.51 | 2.25 | 5.26 | 0.15 | 0.04 | 400 | 10 | 400 | 8 | 130 | 8 | 1 |
| Ex. 3 | 0.2 5 | 0.30 | 0.51 | 2.25 | 5.26 | 0.15 | 0.04 | 600 | 5 | 500 | 2 | 170 | 12 | 6 |

Samples obtained from an ingot having the same composition as Example 1, as Examples 10 to 12, were subjected to the solution heat treatment and the aging treatment under the conditions as shown in Table 2B. Example 10 was the same as Example 1 except that it describes the ratio of the solution heat treatment time to the aging treatment time.

<Evaluation>

Table 3A]

| | Ingot cracking | Welding cracking | Forging cracking | Tensile strength (MPa) | | Strength change ratio | Stress corrosion cracking | Local melting | Hardness recovery performance of heat-affected portion |
|---|---|---|---|---|---|---|---|---|---|
| | | | | Single-step aging (A) | Two-step aging (B) | (B-A) /B*100 | | | |
| Ex. 1 | Nil | Nil | Nil | 512 | 515 | 0.6 | Nil | Nil | Good |
| Ex. 2 | Nil | Nil | Nil | 512 | 510 | -0.4 | Nil | Nil | Good |
| Ex.3 | Nil | Nil | Nil | 510 | 511 | 0.2 | Nil | Nil | Good |
| Ex. 4 | Nil | - | Nil | 501 | 515 | 2.7 | Nil | Nil | Good |
| Ex. 5 | Nil | - | Nil | 530 | 531 | 0.2 | Nil | Nil | Good |
| Ex. 6 | Nil | Nil | Nil | 521 | 520 | -0.2 | Nil | Nil | Good |
| Ex. 7 | Nil | Nil | Nil | 525 | 522 | -0.6 | Nil | Nil | Good |
| Comp. Ex. 1 | Occurred | Nil | - | - | - | - | - | - | - |
| Comp. Ex. 2 | Nil | Nil | Occurred | - | - | - | - | - | - |
| Comp. Ex. 3 | Nil | Nil | Nil | 451 | 511 | 11.7 | Nil | Nil | Good |
| Comp. Ex. 4 | Nil | Nil | Nil | 448 | 509 | 12.0 | Nil N | Nil | Good |
| Comp. Ex. 5 | Nil | Nil | Nil | 520 | 522 | 0.4 | Nil | Nil | Good |
| Comp. Ex. 6 | Nil | Nil | Nil | 420 | 422 | 0.5 | Occurred | Nil | Good |
| Comp. Ex. 7 | Nil | - | Occurred | - | - | - | Occurred | - | - |
| Comp. Ex. 8 | Nil | Nil | Nil | 435 | 433 | -0.5 | - | Nil | Good |

23

EP 2 592 170 B1

| | Ingot cracking | Welding cracking | Forging cracking | Tensile strength (MPa) | | Strength change ratio | Stress corrosion cracking | Local melting | Hardness recovery performance of heat-affected portion |
|---|---|---|---|---|---|---|---|---|---|
| | | | | Single-step aging (A) | Two-step aging (B) | (B-A) /B*100 | | | |
| Comp. Ex. 9 | Nil | Nil | Nil | 553 | 555 | 0.4 | Occurred | Nil | Poor |
| Comp. Ex. 10 | Nil | Nil | Nil | 440 | 438 | -0.5 | Nil | Nil | Good |
| Comp. Ex. 11 | Nil | Nil | Nil | 560 | 564 | 0.7 | Occurred | Nil | Poor |
| Comp. Ex. 12 | Nil | Occurred | Nil | 420 | 421 | 0.2 | Nil | Nil | Good |
| Comp. Ex. 13 | Occurred | - | - | - | - | - | Nil | - | - |
| Comp. Ex. 14 | Nil | - | Occurred | - | - | - | - | - | - |
| Comp. Ex. 15 | Nil | | - | - | - | - | - | Occurred | - |
| Comp. Ex. 16 | Nil | - | Occurred | - | - | - | - | - | - |
| Comp. Ex. 17 | Nil | - | - | - | - | - | - | Occurred | - |
| Comp. Ex. 18 | Nil | Nil | Nil | 380 | 377 | -0.8 | Nil | Nil | Good |
| Comp. Ex. 19 | Nil | - | Nil | - | - | - | - | Occurred | - |
| Comp. Ex. 20 | Nil | Nil | Nil | 401 | 402 | 0.2 | Nil | Nil | Good |
| Comp. Ex. 21 | Nil | Nil | Nil | 405 | 411 | 1.5 | Nil | Nil | Good |

24

|  | Ingot cracking | Welding cracking | Forging cracking | Tensile strength (MPa) | | Strength change ratio | Stress corrosion cracking | Local melting | Hardness recovery performance of heat-affected portion |
|---|---|---|---|---|---|---|---|---|---|
|  |  |  |  | Single-step aging (A) | Two-step aging (B) | (B-A) /B*100 |  |  |  |
| Comp. Ex. 21 | Nil | Nil | Nil | 411 | 413 | 0.5 | Nil | Nil | Good |
| Comp. Ex. 23 | Nil | Nil | Nil | 403 | 415 | 2.9 | Nil | Nil | Good |

Table 3B

| | Ingot cracking | Welding cracking | Forging cracking | Tensile strength (MPa) | | Strength change ratio | Stress corrosion cracking | Local melting | Hardness recovery performance of heat-affected |
|---|---|---|---|---|---|---|---|---|---|
| | | | | Single-step aging (A) | Two-step aqinq (B) | (B-A)/B*100 | | | |
| Ex. 10 | Nil | Nil | Nil | 512 | 515 | 0.6 | Nil | Nil | Good |
| Ex. 11 | Nil | Nil | Nil | 452 | 457 | 1.1 | Nil | Nil | Good |
| Ex. 12 | Nil | Nil | Nil | 520 | 525 | 1.0 | Nil | Nil | Good |

As shown in Tables 3A and 3B, JIS14B proportional test pieces were extracted from the welded portion and base materials of the obtained samples to measure the tensile strength (MPa).

As a result of the tensile strength test, samples with 450 MPa or more was evaluated as "Good".

The Vickers hardness of the heat-affected portion 15 affected during the welding (see Fig. 4B) and that of an end portion not affected by heat (another portion 16) were measured. It was evaluated such that samples with a value (ratio) of more than 0.8 obtained by dividing the Vickers hardness of the heat-affected portion affected during the welding by the Vickers hardness of the end portion 16 not affected by heat were "good" in hardness recovery performance of the heat-affect portion 15, and samples with a value (ration) of less than 0.8 were "bad" in hardness recovery performance of the heat-affected portion 15.

Furthermore, test pieces of 2 mm x 4.3 mm x 42.2 mm were extracted from the upset product (forged product sample) to apply a pressure corresponding to 70% of the proof strength, using a three-point bending jig. When applying the load, the test piece and jig were electrically insulated. As an etching solution, chromic oxide (IV) 36 g, dichromate potassium 30 g, and sodium chloride 3 g were melted in 1 liter of pure water and maintained at 95 to 100 °C were prepared. After immerging the test piece to which the load was applied in the etching solution, the test pieces were visually observed for occurrences of cracking.

In each sample, the change ratio of the strength of a single-step aging treatment product to a two-step aging treatment product was calculated. That is, using the equation "(B-A)/B x 100 = strength change ratio (%)", wherein the tensile strength of the single-step aging treatment product is "A" and the tensile strength of the two-step aging treatment product is "B", the strength change ratio (%) of the single-step aging treatment product to the tow-step aging treatment product was obtained. When the strength change ratio (%) was within 5 % (preferably within 3 %), it was evaluated that there is no difference in strength (good).

<Results>

As shown in Tables 3A and 3B, as for Examples 1-7, 11 and 12, it is understood that they satisfy all requirements of the present invention, and therefore the ingot cracking, the welding cracking, the forging cracking, and the local melting did not occur; they were excellent in tensile strength and joint efficiency; they had a small difference in strength between the single-step aging treatment product and the two-step aging treatment product; and sufficient strength could be obtained in the single-step aging treatment. Also, stress corrosion cracking did not occur. The "joint efficiency" has the same meaning as the hardness recovery performance of the heat-affected portions. Example 10 essentially had the same conditions as in Example 1, and therefore the similar results as in Example 1 are obtained.

As it is apparent from Table 3B, in Examples 10 to 12, the ratio of the aging treatment time to the solution heat treatment time (aging treatment time/solution heat treatment time) were 1 to 6, and the solution heat treatment time did not differ a lot from the solution heat treatment time.

On the other hand, in Comparative Example 1, the Fe content was too little, and therefore ingot cracking occurred.

In Comparative Example 2, the Fe content was excessive, and therefore large intermetallic compounds had developed, and cracking occurred during the forging.

In Comparative Example 3, since the Cu content was too little, in the early stage of the aging, an Al-Cu-Mg series intermetallic compound could not be finely deposited in the Al matrix, so there was a significant decrease in strength of the single-step aging treatment product compared to a two-step aging treatment product.

In Comparative Example 4, the Cu content was slightly less and the Mg content was also little. Therefore, for the similar reason as Comparative Example 3, excellent tensile strength could not be obtained with a single-step aging treatment product, and the strength of the single-step aging treatment product had significantly less strength than the two-step aging treatment product.

In Comparative Example 5, the Cu content was excessive, and therefore the corrosion resistance deteriorated and the stress corrosion cracking occurred.

In Comparative Example 6, since the Mn content was too little, rough recrystallization occurred at the solution heat treatment after forging, and the tensile strength was deteriorated.

In Comparative Example 7, since the Mn content was excessive, large intermetallic compounds were generated, and cracking occurred during forging.

In Comparative Example 8, since the Mg content was too little, it had less deposition strengthening component and the tensile strength was deteriorated.

In Comparative Example 9, since the Mg content was excessive, the hardness of the welding portion could not be sufficiently recovered, and the hardness recovery performance at the heat-affected portion was insufficient. Furthermore, the corrosion resistance had worsened, and the stress corrosion cracking occurred.

In Comparative Example 10, since the Zn content was too little, there was less deposition strengthening component, and the tensile strength was deteriorated.

In Comparative Example 11, since the Zn content was excessive, the hardness recovery performance at the heat-affected portion worsened. The corrosion resistance also worsened and the stress corrosion cracking occurred.

In Comparative Example 12, since the Zr content was too little, rough recrystallization occurred during the solution heat treatment after forging, and the tensile strength was deteriorated. Also, the crystal grains at the welded portion were rough and welding cracking occurred.

In Comparative Example 13, since the Zr content was excessive, the ingot refinement effect of Ti-B declined and ingot cracking occurred.

In Comparative Example 14, since the homogenization treatment temperature was too low, microsegregation remained, and the plastic deformation resistance during forging was large and cracking occurred.

In Comparative Example 15, since the homogenization treatment temperature was too high, local melting occurred.

In Comparative Example 16, since the forging pre-heating temperature was too low, the plastic deformation resistance during forging was large, and cracking occurred.

In Comparative Example 17, since the forging pre-heating temperature was too high, local melting occurred.

In Comparative Example 18, since the solution heat treatment temperature was too low, the deposition strengthening element could not be sufficiently solidly dispersed. Thus, the deposition amount decreased and the tensile strength was deteriorated.

In Comparative Example 19, since the solution heat treatment temperature was too high, local melting occurred.

In Comparative Examples 20-23, since the aging treatment conditions were deviated from the gist of the present invention and were unsuitable, the aging was excessive or insufficient, and the tensile strength was deteriorated.

Generally, in Examples 1 to 4 according to the present invention, there was no strength difference (strength change ratio) between the single-step aging treatment product and the two-step aging treatment product. Preferred and sufficient strength could be achieved in a single-step aging treatment (460 MPa or more, more preferably 500 MPa or more), and a product that does not cause cracking and can be practically used could be obtained.

In Examples 1 to 4, since there was no temperature difference between the single-step aging treatment product and the two-step aging treatment product, the second aging treatment can be eliminated and not only did the process could be simplified, the condition management of heat treatment (aging treatment) became easy, and the strength quality for heat treatment of products became stable.

On the other hand, in Comparative Examples 3 and 4, the difference in strength of the single-step aging treatment product and two-step aging treatment product were large, and to obtain the preferred and sufficient strength, the two-step aging treatment was necessary. In other Comparative Examples, preferred and sufficient strengths could be obtained by the single-step aging treatment, but they could not be used practically because cracking occurred or preferred strength could not be obtained.

[Table 4]

|  | Zn (mass%) | Mg (mass%) | Cu (mass%) | á, when Zn/(Mg-áCu)=3 | Strength change ratio |
|---|---|---|---|---|---|
| Ex. 1 | 5.26 | 2.25 | 0.3 | 1.656 | 0.6 |
| Ex. 2 | 5.27 | 2.05 | 0.11 | 2.667 | -0.4 |

(continued)

|  | Zn (mass%) | Mg (mass%) | Cu (mass%) | á, when Zn/(Mg-áCu)=3 | Strength change ratio |
|---|---|---|---|---|---|
| Ex. 3 | 5.22 | 2.3 | 0.1 | 5.6 | 0.2 |
| Ex. 4 | 5.26 | 2.25 | 0.3 | 1.656 | 2.7 |
| Ex. 5 | 5 | 2.2 | 0.4 | 1.334 | 0.2 |
| Ex. 6 | 5.2 | 2.5 | 0.3 | 2.556 | -0.2 |
| Ex. 7 | 5.5 | 2.25 | 0.3 | 1.389 | -0.6 |
| Comp. Ex. 3 | 5.45 | 2.49 | 0.01 | 67.334 | 11.7 |
| Comp. Ex. 4 | 5.48 | 1.89 | 30 | 0.792 | 12 |

Table 4 shows the value of á and the strength change ratio when the equation "Zn amount/(Mg amount - á Cu amount) = 3" was applied to Examples 1-7 and Comparative examples 3 and 4.

As shown in Table 4, in Examples 1 to 7 in which á is within the range of 1.3 to 6, the strength change ratio was significantly small and excellent. On the other hand, the strength change ratio in Comparative Example 3 having very large á and Comparative Example 4 having a very small á were very poor.

Based on Table 4, when á=1 to 20, the strength change ratio was predicted to be a preferred value.

[Table 5]

| Example | DAS (ìm) | Average particle diameter of crystallized substances (ìm) |
|---|---|---|
| 1(10) | 35 | 6.2 |
| 2 | 34 | 5.8 |
| 3 | 35 | 6.4 |
| 4 | 35 | 6.3 |
| 5 | 34 | 6.0 |
| 6 | 36 | 7.2 |
| 7 | 35 | 7.0 |
| 11 | 33 | 6.2 |
| 12 | 35 | 6.2 |

Table 5 shows the DAS ($\mu$m) and the average particle diameter ($\mu$m) of crystallized substances of the Al alloy ingot (sample) of Examples 1 (10) to 7, 11, and 12.

As shown in Table 5, the samples of Examples according to the present invention all have DAS of 40 $\mu$m or less and the average particle diameter of crystallized substances of 8 $\mu$m or less.

As it is apparent from the above Examples and Comparative Examples, according to the present invention, an Al product (Al alloy joined body) with high strength and having the desired mechanical characteristics and stress corrosion resistance performance can be obtained without losing the hardness recovery performance after welding. Furthermore, an Al alloy product having the aforementioned desired characteristics can be assuredly and efficiently produced with a simplified single-step aging treatment in a short time, at 130 to 170 ºC for 8 to 12 hours.

It should be understood that the terms and expressions used herein are used for explanation and have no intention to be used to construe in a limited manner, do not eliminate any equivalents of features shown and mentioned herein, and allow various modifications falling within the claimed scope of the present invention.

While the present invention may be embodied in many different forms, a number of illustrative embodiments are described herein with the understanding that the present disclosure is to be considered as providing examples of the principles of the invention and such examples are not intended to limit the invention to preferred embodiments described herein and/or illustrated herein.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive.

## INDUSTRIAL APPLICABILITY

The method for producing an Al alloy joined body of the present invention can be applicable to forging and welding technologies for producing high quality Al alloy products.

10: Al alloy joined body (Al alloy product)
11, 12: member to be joined
13: welded portion
14: build-up portion
15: heat-affected portion
16: portion not affected by the heat of the welding
22: solution heat treating zone (solution heat treatment heat processing zone)
23: water tank zone
231: water tank
25: aging treatment zone (single-step aging heat treatment zone)
27: conveyor (carrying device)
225, 235, 255, 311, 321: conveyor (carrying means)
226, 256: turn table (carrying device)
W: treating member

## Claims

1. A method for producing a welding Al alloy forged member, comprising:

   a step of obtaining an Al alloy melt having an alloy composition consisting of Fe: 0.2 to 0.35 mass%, Cu: 0.1 to 0.4 mass%, Mn: 0.3 to 0.6 mass%, Mg: 2.0 to 2.5 mass%, Zn: 5.0 to 5.5 mass%, Zr: 0.1 to 0.2 mass%, Ti: 0.2 mass% or less, and the balance being Al and inevitable impurities;
   a step of obtaining an Al alloy ingot having a structure in which a dendrite arm spacing (DAS) is 40 $\mu$m or less and an average particle diameter is 8 $\mu$m or less by continuously casting the Al alloy melt at a casting rate meeting a condition of [maximum casting rate (mm/min) $\leq$ - 1.43 x casting diameter (mm) + 500];
   a step of obtaining an Al alloy cast member by subjecting the Al alloy ingot to a homogenization treatment of holding the Al alloy ingot for one hour or more at a temperature of 400 to 600 °C;
   a step of obtaining an Al alloy forged member by subjecting the Al alloy cast member to hot forging;
   a step of subjecting the Al alloy forged member to a solution heat treatment; and
   a step of subjecting the Al alloy forged member after the solution heat treatment to a single-step aging treatment, wherein
   the hot forging is performed at a temperature of 350 to 500 °C,
   the single-step aging treatment is performed at a temperature of 130 to 170 °C for one to six times as long as a time for the solution heat treatment,
   the solution heat treatment is performed at a temperature of 400 to 500 °C, and
   the method meets a condition of (Zn mass%) / (Mg mass%-$\alpha$x Cu mass%) = 3, wherein $\alpha$ = 1-20.

2. The method for producing an Al alloy forged member as recited in claim 1, comprising:

   a first preparation step of setting each content of Fe, Cu, Mn, Mg, Zn, Zr, and Ti of the Al alloy melt to each temporary value prior to a preparation of the Al alloy melt;
   a second preparation step of setting a target characteristic of the Al alloy forged member to be produced;
   a third preparation step of obtaining a pre-production Al alloy forged member by sequentially subjecting the pre-production Al alloy melt obtained based on the temporary value to a step compliant with the step of obtaining the Al alloy ingot, a step compliant with the step of obtaining the Al alloy cast member, a step compliant with the step of the solution heat treatment, and a step compliant with the step of the single-step aging treatment; and
   a forth preparation step of comparing an actual characteristic obtained from the pre-production Al alloy forged member with the target characteristic and changing the temporary value based on a comparison result, wherein an Al alloy melt for actual use is prepared by repeatedly performing the third and fourth preparation steps.

3. The method for producing a welding Al alloy forged member as recited in claim 2, wherein
at the second preparation step, a target aging time of the single-step aging treatment is previously set;
at the third preparation step, an actual aging time is measured at the fourth preparation step, the actual aging time is compared with the target aging time and the temporary value is changed based on a comparison result.

4. A method for producing an Al alloy joined body, comprising:

producing an Al alloy forged number using the method of claim 1; and
a step of obtaining an Al alloy joined body by welding the Al alloy forged member after the single-step aging treatment to an Al alloy component to be joined.

5. The method for producing an Al alloy joined body as recited in claim 4, wherein a member having the same structure as the Al alloy forged member after the aging treatment is used as the component to be joined.


**Patentansprüche**

1. Ein Verfahren zum Herstellen eines Al-Schweißlegierungs-Schmiedeelements, aufweisend:

einen Schritt des Erhaltens einer Al-Legierungsschmelze, aufweisend eine Legierungszusammensetzung bestehend aus Fe: 0,2 bis 0,35 Masse-%, Cu: 0,1 bis 0,4 Masse-%, Mn: 0,3 bis 0,6 Masse-%, Mg: 2,0 bis 2,5 Masse-%, Zn: 5,0 bis 5,5 Masse-%, Zr: 0,1 bis 0,2 Masse-%, Ti: 0,2 Masse-% oder weniger, wobei der Rest Al und unvermeidbare Verunreinigungen sind,
einen Schritt des Erhaltens eines Al-Legierungsblocks mit einer Struktur, bei der ein Dendritenarmabstand (DAS) 40 $\mu$m oder weniger beträgt und ein durchschnittlicher Partikeldurchmesser 8 $\mu$m oder weniger beträgt, durch Stranggießen der Al-Legierungsschmelze mit einer Gießrate, die eine Bedingung [maximale Gießrate (mm/min) $\leq$ -1,43 x Gießdurchmesser (mm) + 500] erfüllt,
einen Schritt des Erhaltens eines Al-Legierungsgusselements durch Unterziehen des Al-Legierungsblocks einer Homogenisierungsbehandlung des Haltens des Al-Legierungsblocks über eine Stunde oder mehr bei einer Temperatur von 400 bis 600°C,
einen Schritt des Erhaltens eines Al-Legierungs-Schmiedeelements durch Unterziehen des Al-Legierungsgusselements einem Warmschmieden,
einen Schritt des Unterziehens des Al-Legierungs-Schmiedeelements einem Lösungsglühen und
einen Schritt des Unterziehens des Al-Legierungs-Schmiedeelements nach dem Lösungsglühen einer Einschritt-Vergütungsbehandlung, wobei
das Heißschmieden bei einer Temperatur von 350 bis 500°C durchgeführt wird,
die Einschritt-Vergütungsbehandlung bei einer Temperatur von 130 bis 170°C über das Ein- bis Sechsfache einer Zeit für das Lösungsglühen durchgeführt wird,
das Lösungsglühen bei einer Temperatur von 400 bis 500°C erfolgt und
das Verfahren eine Bedingung erfüllt, bei der (Zn Masse-%) / (Mg Masse-% -$\alpha$x Cu Masse-%) = 3, wobei $\alpha$ = 1-20.

2. Das Verfahren zum Herstellen eines Al-Legierungs-Schmiedeelements gemäß Anspruch 1, aufweisend:

einen ersten Herstellungsschritt des Setzens jedes Gehaltes an Fe, Cu, Mn, Mg, Zn, Zr und Ti der Al-Legierungsschmelze auf jeden temporären Wert vor einem Herstellen der Al-Legierungsschmelze,
einen zweiten Herstellungsschritt des Festsetzens einer Soll-Charakteristik des herzustellenden Al-Legierungs-Schmiedeelements,
einen dritten Herstellungsschritt des Erhaltens eines Vorproduktions-Al-Legierungs-Schmiedeelements durch sequentielles Unterziehen der Vorproduktions-Al-Legierungsschmelze, die auf der Grundlage des temporären Wertes erhalten wird, einem Schritt, der mit dem Schritt des Erhaltens des Al-Legierungsblocks übereinstimmt, einem Schritt, der mit dem Schritt des Erhaltens des Al-Legierungsgusselements übereinstimmt, einem Schritt, der mit dem Schritt des Lösungsglühens übereinstimmt, und einem Schritt, der mit dem Schritt der Einschritt-Vergütungsbehandlung übereinstimmt, und
einen vierten Herstellungsschritt des Vergleichens einer Ist-Charakteristik, die aus dem Vorproduktions-Al-Legierungs-Schmiedeelement erhalten wird, mit der Soll-Charakteristik, und des Änderns des temporären Wertes basierend auf einem Vergleichsergebnis,
wobei eine Al-Legierungsschmelze zum tatsächlichen Gebrauch durch wiederholtes Durchführen des dritten und vierten Herstellungsschrittes hergestellt wird.

**3.** Das Verfahren zum Herstellen eines Al-Schweißlegierungs-Schmiedeelements gemäß Anspruch 2, wobei

im zweiten Herstellungsschritt eine Soll-Vergütungszeit der Einschritt-Vergütungsbehandlung zuvor festgesetzt wird,
im dritten Herstellungsschritt eine Ist-Vergütungszeit im vierten Herstellungsschritt gemessen wird, die Ist-Vergütungszeit mit der Soll-Vergütungszeit verglichen wird und der temporäre Wert basierend auf einem Vergleichsergebnis geändert wird.

**4.** Ein Verfahren zum Herstellen eines verbundenen Al-Legierungskörpers, aufweisend:

Herstellen eines Al-Legierungs-Schmiedeelements mittels des Verfahrens nach Anspruch 1 und
einen Schritt des Erhaltens eines verbundenen Al-Legierungskörpers durch Verschweißen des Al-Legierungs-Schmiedeelements nach der Einschritt-Vergütungsbehandlung mit einem zu verbindenden Al-Legierungsbauteil.

**5.** Das Verfahren zum Herstellen eines verbundenen Al-Legierungskörpers gemäß Anspruch 4, wobei ein Element, das die gleiche Struktur wie das Al-Legierungs-Schmiedeelement nach der Vergütungsbehandlung hat, als zu verbindendes Bauteil verwendet wird.

**Revendications**

**1.** Procédé de fabrication d'un élément forgé en alliage d'aluminium de soudage, comprenant :

une étape d'obtention d'un bain d'alliage d'aluminium ayant une composition d'alliage composée de Fe : 0,2 à 0,35% en masse, de Cu : 0,1 à 0,4% en masse, de Mn : 0,3 à 0,6% en masse, de Mg : 2,0 à 2,5% en masse, de Zn : 5,0 à 5,5% en masse, de Zr : 0,1 à 0,2% en masse, de Ti : 0,2% en masse ou moins, le reste étant de l'aluminium et des impuretés inévitables ;
une étape d'obtention d'un lingot d'alliage d'aluminium, ayant une structure dans laquelle un espacement des bras de dendrite (DAS) est de 40 $\mu$m ou moins et un diamètre moyen des particules est de 8 $\mu$m ou moins, en coulant en continu le bain d'alliage d'aluminium à une vitesse de coulée qui satisfait une condition [vitesse de coulée maximale (mm/min) $\leq$ - 1,43 x diamètre de coulée (mm) + 500] ;
une étape d'obtention d'un élément coulé en alliage d'aluminium en soumettant le lingot d'alliage d'aluminium à un traitement d'homogénéisation qui consiste à maintenir le lingot d'alliage d'aluminium pendant une heure ou plus à une température de 400 à 600°C ;
une étape d'obtention d'un élément forgé en alliage d'aluminium en soumettant l'élément coulé en alliage d'aluminium à un forgeage à chaud ;
une étape de soumission de l'élément forgé en alliage d'aluminium à un traitement thermique en solution ; et
une étape de soumission de l'élément forgé en alliage d'aluminium, après le traitement thermique en solution, à un traitement de vieillissement en une seule étape, dans lequel
le forgeage à chaud est effectué à une température de 350 à 500°C,
le traitement de vieillissement en une seule étape est effectué à une température de 130 à 170°C pendant une durée égale à une à six fois la durée du traitement thermique en solution,
le traitement thermique en solution est effectué à une température de 400 à 500°C, et
le procédé respecte une condition (% en masse de Zn) / (% en masse de Mg-$\alpha$x % en masse de Cu) = 3, où $\alpha$ = 1-20.

**2.** Procédé de fabrication d'un élément forgé en alliage d'aluminium selon la revendication 1, comprenant :

une première étape de préparation qui consiste à définir chaque teneur en Fe, Cu, Mn, Mg, Zn, Zr et Ti du bain d'alliage d'aluminium sur chaque valeur temporaire avant une préparation du bain d'alliage d'aluminium ;
une seconde étape de préparation qui consiste à définir une caractéristique cible de l'élément forgé en alliage d'aluminium à fabriquer ;
une troisième étape de préparation qui consiste à obtenir un élément forgé en alliage d'aluminium de préfabrication en soumettant séquentiellement le bain d'alliage d'aluminium de préfabrication obtenu sur la base de la valeur temporaire à une étape conforme à l'étape d'obtention du lingot d'alliage d'aluminium, une étape conforme à l'étape d'obtention de l'élément coulé en alliage d'aluminium, une étape conforme à l'étape de traitement thermique en solution, et une étape conforme à l'étape de traitement de vieillissement en une seule étape ; et une quatrième étape de préparation qui consiste à comparer une caractéristique réelle obtenue à partir de l'élément forgé en alliage d'aluminium de préfabrication avec la caractéristique cible, et à modifier la valeur temporaire sur la base d'un résultat de la comparaison,

dans lequel un bain d'alliage d'aluminium destiné à un usage réel est préparé en répétant l'exécution des troisième et quatrième étapes de préparation.

3.  Procédé de fabrication d'un élément forgé en alliage d'aluminium de soudage selon la revendication 2, dans lequel à la seconde étape de préparation, une durée de vieillissement cible du traitement de vieillissement en une seule étape est définie au préalable ;

à la troisième étape de préparation, une durée de vieillissement réelle est mesurée à la quatrième étape de préparation, la durée de vieillissement réelle est comparée avec la durée de vieillissement cible, et la valeur temporaire est modifiée sur la base d'un résultat de la comparaison.

4.  Procédé de fabrication d'un corps joint en alliage d'aluminium, comprenant :

la fabrication d'un élément forgé en alliage d'aluminium selon le procédé selon la revendication 1 ; et une étape d'obtention d'un corps joint en alliage d'aluminium en soudant l'élément forgé en alliage d'aluminium après le traitement de vieillissement en une seule étape sur un composant en alliage d'aluminium à joindre.

5.  Procédé de fabrication d'un corps joint en alliage d'aluminium selon la revendication 4, dans lequel un élément ayant la même structure que l'élément forgé en alliage d'aluminium après le traitement de vieillissement est utilisé comme composant à joindre.

FIG.1

FIG.2

FIG.3

FIG.4A

FIG.4B

FIG.5

FIG.6

FIG.7

FIG.8

**REFERENCES CITED IN THE DESCRIPTION**

**Patent documents cited in the description**

- JP H0270044 B
- JP S57158360 B
- JP S5110113 B
- JP 2002294383 A

**Non-patent literature cited in the description**

- Dendrite Arm Spacing Measurement Method. Light Metal. Japan Institute of Light Metals, 1988, vol. 38, 45